# EUROPEAN PATENT APPLICATION

(11) **EP 3 905 667 A1**
(43) Date of publication of application: **03.11.2021**
(21) Application number: 19901858.1
(22) Date of filing: 30.12.2019
(51) Int. Cl.: H04N 7/15

(54) **VIDEO PROCESSING SYSTEM, METHOD AND APPARATUS, STORAGE MEDIUM, AND ELECTRONIC APPARATUS**

(30) Priority: 29.12.2018 CN 201811643630
(71) Applicant: ZTE Corporation, Shenzhen, Guangdong 518057 (CN)
(72) Inventor: BAO, Minghui, Shenzhen, Guangdong 518057 (CN)
(74) Representative: Studio Torta S.p.A.
(86) International application number: PCT/CN2019/130000
(87) International publication number: WO 2020/135876

(57) **Abstract**

Disclosed are a video processing system, method and apparatus, a storage medium and an electronic apparatus. The system comprises: a video conference management main device configured to acquire a common coding capability and/or a common decoding capability; wherein the common coding capability is used for indicating a video coding result between a local video conference terminal and a remote video conference terminal, and the common decoding capability is used for indicating a video decoding result between the local video conference terminal and the remote video conference terminal; at least one video encoding device configured to code, according to the common coding capability sent by the video conference management main device, a video code stream acquired by the at least one video encoding device, wherein the video encoding device is connect to the video conference management main device; and/or at least one video encoding device, configured to decode, according to the common decoding capability sent by the video conference management main device, a video code stream packet acquired by the at least one video encoding device, wherein the video decoding device is connect to the video conference management main device. (Fig. 1)

## Description

### FIELD OF THE INVENTION

The present application relates to the field of communications, in particular to a video processing system, method and apparatus, a storage medium and an electronic apparatus.

### BACKGROUND OF THE INVENTION

In field of video conferences, a video conference terminal product for realizing a video conference in the related art tends to have features of a complex structure and a high price. Since a video conference involves the processing of multiple video code streams, a targeted digital signal processing (DSP) codec chip is required to form a video conference terminal product capable of directly completing the processing of the multiple video code streams, where all video code streams in the video conference are coded and decoded by the above-mentioned video conference terminal product.

The above-mentioned video conference terminal product in the related art has more defects. From the perspective of user usage, if a user needs to upgrade and update a performance of the video conference terminal product, it is necessary to change the overall video conference terminal product. For example, the video conference terminal product supports a video having a resolution of 1080P at most, and thus, video processing cannot be directly carried out in a video conference where a certain conference hall has coding and decoding requirements for a high-definition 4K video during the conference. Therefore, the user needs to change the full set of video conference terminal product, which results in the user needing to bear a high change cost. Under the circumstance above, the user further needs to deploy a circuit and mount a device again for the video conference terminal product. For a large conference hall, the above-mentioned circuit deployment and device mounting have many difficulties.

From the perspective of research and development work, technology of a professional DSP codec chip develops relatively slowly, while a universal central processing unit (CPU) chip such as an advanced reduced instruction set computing machine (ARM) chip cannot effectively process the multiple video code streams in a video conference environment when implementing software coding and decoding. Therefore, it is difficult in the related art to realize control over costs on the premise that a high-performance chip capable of processing multiple code streams is obtained through research and development. An integrated structure of the video conference terminal product in the related art causes the product more complex, such that the research and development cost is also affected.

### SUMMARY OF THE INVENTION

Embodiments of the present application provides a video processing system, method and apparatus, a storage medium and an electronic apparatus, which are used for at least solving the problem in the related art of it being impossible to control user usage costs and research and development costs due to multiple video code streams being processed in a centralized manner during a video conference.

According to one embodiment of the present application, a video processing system is provided, comprising:
a video conference management main device configured to acquire a common coding capability and/or a common decoding capability, the common coding capability is used for indicating a video coding result between a local video conference terminal and a remote video conference terminal, and the common decoding capability is used for indicating a video decoding result between the local video conference terminal and the remote video conference terminal;
at least one video encoding device configured to code, according to the common coding capability sent by the video conference management main device, a video code stream acquired by the at least one video encoding device, the at least one video encoding device being connected to the video conference management main device; and/or
at least one video decoding device configured to decode, according to the common decoding capability sent by the video conference management main device, a video code stream packet acquired by the at least one video decoding device, the at least one video decoding device being connected to the video conference management main device.

According to another embodiment of the present application, when the above-mentioned video processing system comprises at least one video encoding device, a video processing method based on the above-mentioned video processing system is also provided, comprising:
receiving a common coding capability sent by a video conference management main device, the common coding capability being used for indicating a video coding result between a local video conference terminal and a remote video conference terminal; and
coding, according to the common coding capability, a video code stream acquired by the at least one video encoding device.

According to another embodiment of the present application, when the above-mentioned video processing system comprises at least one video encoding device, a video processing method based on the above-mentioned video processing system is also provided, comprising:
acquiring a common coding capability, the common coding capability being used for indicating a video coding result between a local video conference terminal and a remote video conference terminal; and
sending the common coding capability to the at least one video encoding device, so that the at least one video encoding device codes, according to the common coding capability, a video code stream acquired by the at least one video encoding device.

According to another embodiment of the present application, when the above-mentioned video processing system comprises at least one video decoding device, a video processing method based on the above-mentioned video processing system is also provided, comprising:
receiving a common decoding capability sent by the video conference management main device, the common decoding capability being used for indicating a video decoding result between a local video conference terminal and a remote video conference terminal; and
decoding, according to the common decoding capability, a video code stream packet acquired by the at least one video decoding device.

According to another embodiment of the present application, when the above-mentioned video processing system comprises at least one video decoding device, a video processing method based on the above-mentioned video processing system is also provided, comprising:
acquiring a common decoding capability, the common decoding capability being used for indicating a video decoding result between a local video conference terminal and a remote video conference terminal; and
sending the common decoding capability to the at least one video decoding device, so that the at least one video decoding device decodes, according to the common decoding capability, a video code stream packet acquired by the at least one video decoding device.

According to another embodiment of the present application, when the above-mentioned video processing system comprises at least one video encoding device, a video processing apparatus based on the above-mentioned video processing system is also provided, comprising:
a first receiving module configured to receive a common coding capability sent by a video conference management main device, the common coding capability being used for indicating a video coding result between a local video conference terminal and a remote video conference terminal; and
a coding module configured to code, according to the common coding capability, a video code stream acquired by the at least one video encoding device.

According to another embodiment of the present application, when the above-mentioned video processing system comprises at least one video encoding device, a video processing apparatus based on the above-mentioned video processing system is also provided, comprising:
a first acquisition module configured to acquire a common coding capability, the common coding capability being used for indicating a video coding result between a local video conference terminal and a remote video conference terminal; and
a first sending module configured to send the common coding capability to the at least one video encoding device, the common coding capability being used for instructing the at least one video encoding device to code video data acquired by the at least one video encoding device.

According to another embodiment of the present application, when the above-mentioned video processing system comprises at least one video decoding device, a video processing apparatus based on the above-mentioned video processing system is also provided, comprising:
a second receiving module configured to receive a common decoding capability sent by a video conference management main device, the common decoding capability being used for indicating a video decoding result between a local video conference terminal and a remote video conference terminal; and
a decoding module configured to decode, according to the common decoding capability, a video code stream packet acquired by the at least one video decoding device.

According to another embodiment of the present application, when the above-mentioned video processing system comprises at least one video decoding device, a video processing apparatus based on the above-mentioned video processing system is also provided, comprising:
a second acquisition module configured to acquire a common decoding capability, the common decoding capability being used for indicating a video decoding result between a local video conference terminal and a remote video conference terminal; and
a second sending module configured to send the common decoding capability to the at least one video decoding device, so that the at least one video decoding device decodes, according to the common decoding capability, a video data packet acquired by the at least one video decoding device.

According to yet another embodiment of the present application, a storage medium is also provided. The storage medium stores a computer program, and the computer program is configured to implement, when being run, the steps of any one of the above method embodiments.

According to yet another embodiment of the present application, an electronic apparatus is also provided, comprising a memory and a processor. The memory stores a computer program, and the processor is configured to run the computer program to implement the steps of any one of the above method embodiments.

### BRIEF DESCRIPTION OF THE DRAWINGS

Fig. 1 is a structure diagram of a video processing system provided in the embodiments of the present application;
Fig. 2 is a schematic interaction diagram of a video processing system of the embodiments of the present application;
Fig. 3 is a flowchart of the connection relationship establishment in a video processing system provided in the embodiments of the present application;
Fig. 4 is a flowchart of the connection relationship establishment in another video processing system provided in the embodiments of the present application;
Fig. 5 is schematic structure diagram of a video processing system provided in the embodiments of the present application;
Fig. 6 is a schematic interaction diagram of the registration management in a video processing system of the embodiments of the present application;
Fig. 7 is a schematic interaction diagram of coding or decoding in a video processing system of the embodiments of the present application;
Fig. 8 is schematic structure diagram of a video processing system provided in the embodiments of the present application;
Fig. 9 is a schematic interaction diagram of the registration management in a video processing system provided in the embodiments of the present application;
Fig. 10 is a schematic interaction diagram of coding or decoding in a video processing system provided in the embodiments of the present application;
Fig. 11 is schematic structure diagram of a video processing system provided in the embodiments of the present application;
Fig. 12 is schematic structure diagram of a video processing system provided in the embodiments of the present application;
Fig. 13 is schematic structure diagram of a video processing system provided in the embodiments of the present application;
Fig. 14 is a flowchart of a video processing method provided in the embodiments of the present application;
Fig. 15 is flowchart of another video processing method provided in the embodiments of the present application;
Fig. 16 is flowchart of another video processing method provided in the embodiments of the present application;
Fig. 17 is flowchart of another video processing method provided in the embodiments of the present application;
Fig. 18 is a structure diagram of a video processing apparatus provided in the embodiments of the present application;
Fig. 19 is a structure diagram of another video processing apparatus provided in the embodiments of the present application;
Fig. 20 is a structure diagram of another video processing apparatus provided in the embodiments of the present application; and
Fig. 21 is a structure diagram of another video processing apparatus provided in the embodiments of the present application.

### DETAILED DESCRIPTION OF THE EMBODIMENTS

Hereinafter, the present application will be described in detail with reference to the accompanying drawings and in combination with embodiments.

The terms "first", "second", etc. in the specification and claims of the present application as well as the above-mentioned accompanying drawings are used to distinguish similar objects, and are not necessarily used to describe a specific order or a precedence order.

### Embodiment one

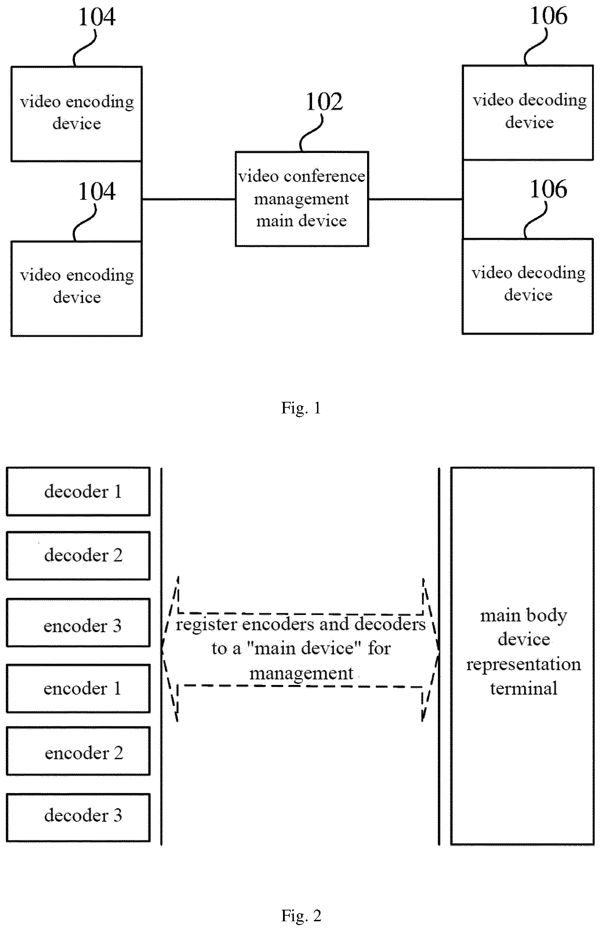

Provided in the present embodiment is a video processing system. Fig. 1 is a structure diagram of the video processing system provided in the embodiment of the present application. As shown in fig. 1, the system comprises:
a video conference management main device (a video conference management main body) 102 configured to acquire a common coding capability and/or a common decoding capability, the coding capability being used for indicating a video coding result between a local video conference terminal and a remote video conference terminal, and the common decoding capability being used for indicating a video decoding result between the local video conference terminal and the remote video conference terminal; at least one video encoding device 104 configured to code, according to the common coding capability sent by the video conference management main device 104, a video code stream acquired by the video encoding device, the video encoding device being connected to the video conference management main device; and/or at least one video decoding device 106 configured to decode, according to the common decoding capability sent by the video conference management main device, a video code stream packet acquired by the video decoding device, the video decoding device being connected to the video conference management main device.

According to the above-mentioned system in the embodiment, a video conference management main device takes a video coding or decoding result between a local video conference terminal and a remote video conference terminal as a common coding or decoding capability, and sends the common coding or decoding capability to a video encoding device or a video decoding device, so that the video encoding device or the video decoding device respectively processes a video according to the above-mentioned common coding or decoding capability. Therefore, the system in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

The above-mentioned video conference management main device, video encoding device and video decoding device together form a video conference terminal product to be used by a user for a video conference. For a conference hall of the video conference, the above-mentioned video conference management main device, video encoding device and video decoding device can not only be integrated in the same hardware device, but also can be respectively realized by using multiple hardware devices. Fig. 2 is a schematic interaction diagram of the video processing system of the embodiment of the present application. As shown in fig. 2, each of multiple video encoding devices and multiple video decoding devices is independently connected to the video conference management main device, and the video conference management main device manages the multiple video encoding devices and the multiple video decoding devices.

Taking a common video conference as an example, the above-mentioned video encoding device tends to be connected to a camera or a personal computer (PC) for coding a video input by a user, the above-mentioned video decoding device tends to be connected to a display and is configured to decode a locally or remotely input video code stream and then display same, and the above-mentioned video conference management main device manages the video encoding device and the video decoding device. Furthermore, an audio function in the video conference can also be implemented by the video conference management main device. As an audio code stream occupies relatively few resources, it is unnecessary to use the video code stream processing method similar to that in the present embodiment, and the video conference management main device directly processing an audio can also realize an operation, such as 3a echo cancellation, which has a relatively high requirement for processing instantaneity.

The above-mentioned video conference management main device, video encoding device and video decoding device can respectively realize functions relating to management, coding and decoding merely by using a universal CPU, and thus, it is unnecessary to use an expensive professional DSP chip in a video conference terminal, thereby achieving the aim of reducing a device cost. For the user, when the user needs to upgrade and update a device in a certain conference hall for different requirements, it is also merely necessary to change a video encoding device or a video decoding device corresponding to an input device or a display in the conference hall, so as to avoid the change of the overall video conference terminal, in particular the change of the video conference management main device. In this scenario, the change of a video encoding device or video decoding device also does not need re-mounting and re-wiring for the overall terminal in the conference hall, thereby improving the use flexibility of the video conference terminal product.

For the research and development work, the video processing system in the embodiment respectively carries out coding and decoding for a video input or video output device by using the corresponding video encoding device and video decoding device, so as to split an extremely complex conference terminal product for processing multiple paths of video media into a plurality of separate split devices, thus reducing the research and development difficulty of each split device, i.e. the video encoding device or the video decoding device, such that a research and development cost of the overall product can also be controlled. Furthermore, by using the video processing system in the embodiment, coupling between multiple devices of the product is also reduced, so as to diversify choices of mutual combinations of the devices.

During practical application, by providing multiple video encoding devices and multiple decoding devices, corresponding video display images can be switched in real time according to requirements, so as to realize more flexible deployment for a video conference in a large-scale conference hall.

The above-mentioned video coding result can specifically be represented as a coding result between a local video conference terminal and a remote video conference terminal that is determined after negotiation and agreement according to a preset protocol, and the coding result needs to conform to format requirements of both the local video conference terminal and the remote video conference terminal. On this basis, the common coding capability can be used for indicating the above-mentioned conformance to the format requirements of the local video conference terminal and the remote video conference terminal, for example, when an H245 specification is used, the common coding capability is used for indicating a coding result obtained from a capability negotiation process defined by the H245 specification. Formats of data mutually transmitted between the above-mentioned local video conference terminal and the remote video conference terminal may be different from each other, but the formats of the data mutually transmitted both need to satisfy the above-mentioned common coding capability. The definitions of the above-mentioned video decoding result and common decoding capability are as stated above, and will not be repeated here.

The video encoding device and the video decoding device in the video processing system of the embodiment each can be connected to one or more video input device (for example, a video camera and a PC) or a video output device (for example, a display) according to the performance or requirements. The embodiment does not limit the number of devices that are connected to the video encoding device and the video decoding device.

The transmission of information between each of the video encoding device and the video decoding device, and the video conference management main device in the embodiment includes, but not limited to transmission control protocol (TCP) network transmission or user datagram protocol (UDP) network transmission.

In practical use, the video encoding device and the video decoding device in the embodiment can be used in a common Android box in a market, so as to form a complete video conference terminal product in a relatively cheap manner. The video encoding device and the video decoding device can also use corresponding devices specially developed by using a field programmable gate array (FPGA)+ARM chip, and the video conference management main device use the Android box to conduct services, thereby realizing a characteristic of flexibility and variability according to requirements of the user.

A powerful video conference multi-path codec terminal product can be formed by using the method by a low cost. The coding and decoding devices can also respectively use a corresponding video decoding device (DEC_DEV) or video encoding device (ENC_DEV) specially developed by using the FPGA+ARM chip, and the video conference management main device (MAIN_DEV) uses the Android box to conduct services, which is flexible and variable, adapting to various scenarios.

In an embodiment, when the system comprises at least one video encoding device, the video encoding device is further configured to: send a first registration request to a video conference management main device, so that the video conference management main device is connected to the video encoding device in response to the first registration request.

In the present embodiment, a connection method between the video conference management main device and the video encoding device includes, but not limited to the method for mutual connection through registration as mentioned above, and any method that enables a connection relationship to be established between the video conference management main device and the video encoding device so that the video conference management main device and the video encoding device can interact with each other falls within the scope of protection of the present application.

In an embodiment, before the step of sending the first registration request to the video conference management main device, the video encoding device is further configured to: send first addressing information to a preset address, so that the video conference management main device returns first addressing acknowledgement information to the video encoding device according to the first addressing information, and the video encoding device sends the first registration request to the video conference management main device according to the first addressing acknowledgement information.

When the video encoding device has learned an address of the video conference management main device, the video encoding device can directly send the first registration request to the corresponding address, and when the video encoding device cannot learn the address of the video conference management main device, the above-mentioned method can be used, groupcasting or broadcasting first addressing information to a preset address, so that the video encoding device can determine the address of the video conference management main device and then establish a connection relationship therewith.

In an embodiment, after the step of sending the first registration request to the video conference management main device, the video encoding device is further configured to: send first keep-alive information to the video conference management main within a preset period, so that the video conference management main device returns first keep-alive acknowledgement information to the video encoding device according to the first keep-alive information.

By sending the first keep-alive information to the video conference management main device, the video encoding device can ensure the video conference management main device learns that the video encoding device remains in connection therewith, and if the video conference management main device has not received the first keep-alive information nor has not sent first keep-alive acknowledgement information, it can be determined that the connection relationship between the video encoding device and the video conference management main device is disconnected, so that the video conference management main device can delete the related device in a timely manner.

In an embodiment, when the system comprises at least one video encoding device, the video conference management main device is further configured to: acquire coding capability information of the video encoding device, and send a common coding capability to the video encoding device according to the coding capability information.

During a connection process of the above-mentioned video encoding device and video decoding device, the video encoding device can send related information of the video encoding device, such as coding capability information, to the video conference management main device, so that the video conference management main device can send the common coding capability to the corresponding video encoding device during a video conference according to the capability information of the video encoding device, so as to ensure that the video encoding device can carry out related processing on a video code stream that conforms to the performance of the video encoding device. The determination of the above-mentioned common coding capability is realized during a process of the video encoding device carrying out negotiation and agreement according to a protocol.

In an embodiment, when the system comprises at least one video encoding device, a video code stream comprises at least one of: a local main video code stream and a local secondary video code stream.

In an embodiment, when the system comprises at least one video encoding device and at least one video decoding device, the video decoding device is further configured to: receive error information sent by the video conference management main device, and code the error information according to the common coding capability, the error information being used for indicating that a decoding error occurs in the video decoding device.

In an embodiment, when the system comprises at least one video decoding device, the video decoding device is further configured to: send a second registration request to the video conference management main device, so that the video conference management main device is connected to the video decoding device in response to the second registration request.

In the present embodiment, a connection method between the video conference management main device and the video decoding device includes, but not limited to the method for mutual connection through registration as mentioned above, and any method that enables a connection relationship to be established between the video conference management main device and the video decoding device so that the video conference management main device and the video decoding device can interact with each other falls within the scope of protection of the present application.

In an embodiment, before the step of sending the second registration request to the video conference management main device, the video decoding device is further configured to: send second addressing information to a preset address, so that the video conference management main device returns second addressing acknowledgement information to the video decoding device according to the second addressing information, and the video decoding device sends the second registration request to the video conference management main device according to the second addressing acknowledgement information.

When the video decoding device has learned an address of the video conference management main device, the video encoding device can directly send the second registration request to the corresponding address, and when the video decoding device cannot learn the address of the video conference management main device, the above-mentioned method can be used, groupcasting or broadcasting second addressing information to a preset address, so that the video decoding device can determine the address of the video conference management main device and then establish a connection relationship therewith.

In an embodiment, after the step of sending the second registration request to the video conference management main device, the video decoding device is further configured to: send second keep-alive information to the video conference management main within a preset period, so that the video conference management main device returns second keep-alive acknowledgement information to the video decoding device according to the second keep-alive information.

By sending the second keep-alive information to the video conference management main device, the video decoding device can ensure the video conference management main device learns that the video decoding device remains in connection therewith, and if the video conference management main device has not received the second keep-alive information nor has not sent second keep-alive acknowledgement information, it can be determined that the connection relationship between the video decoding device and the video conference management main device is disconnected, so that the video conference management main device can delete the related device in a timely manner.

In an embodiment, when the system comprises at least one video decoding device, the video conference management main device is further configured to: acquire decoding capability information of the video decoding device, and send a common decoding capability to the video decoding device according to the decoding capability information.

During a connection process of the above-mentioned video decoding device and video decoding device, the video decoding device can send related information of the video decoding device, such as decoding capability information, to the video conference management main device, so that the video conference management main device can send the common decoding capability to the corresponding video decoding device during a video conference according to the capability information of the video decoding device, so as to ensure that the video decoding device can carry out related processing on a video code stream that conforms to performance of the video decoding device.

In an embodiment, when the system comprises at least one video decoding device, a video code stream packet comprises at least one of: a local main video code stream packet, a local secondary video code stream packet, a remote main video code stream packet and a remote secondary video code stream packet.

In an embodiment, when the system comprises at least one video encoding device and at least one video decoding device, the video decoding device is further configured to: send error information to the video conference management main device when a decoding error occurs in the video decoding device, so that the video conference management main device sends the error information to the video encoding device to code the error information.

In order to further illustrate an operating method of the video processing system in the present embodiment, the video processing system in the present embodiment will be illustrated in detail hereinbelow by way of multiple particular embodiments. In the following particular embodiments, ENC_DEV is used to indicate a video encoding device, DEC_DEV is used to indicate a video decoding device, and MAIN_DEV is used to indicate a video conference management main device.

### Particular embodiment one

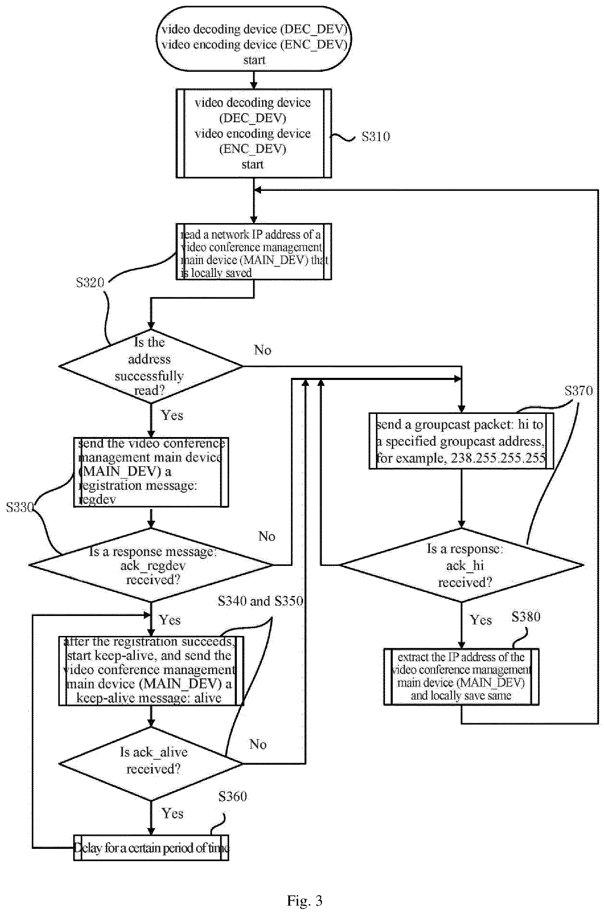

The present particular embodiment provides a process of a video processing system establishing a connection relationship between each of a video encoding device and a video decoding device, and a video conference management main device. Fig. 3 is a flowchart of the connection relationship establishment in the video processing system provided in the particular embodiment of the present application. As shown in fig. 3, the process of establishing a connection relationship between each of the video encoding device and the video decoding device, and the video conference management main device is as follows.

At S310, DEC_DEV or ENC_DEV is started and carries out a self-check, and a service module is started after the self-check is completed.

At S320, DEC_DEV or ENC_DEV reads a network Internet protocol (IP) address of MAIN_DEV that is locally saved, and if the network IP address of MAIN_DEV is not present, S7 is jumped to.

At S330, DEC_DEV or ENC_DEV sends a registration message "regdev" to the network IP address of MAIN_DEV, and if the sending of "regdev" fails or response "ack_regdev" is not received after the sending, S7 is jumped to.

At S340, DEC_DEV or ENC_DEV receives an acknowledgement message "ack_regdev" corresponding to "regdev", and extracts a keep-alive period therefrom.

At S350, DEC_DEV or ENC_DEV sends a "live" message to the network IP address of MAIN_DEV in strict accordance with the keep-alive period, and if the sending of the "live" message fails or "ack_live" is not received after the sending, S7 is jumped to.

At S360, DEC_DEV or ENC_DEV receives a response message "ack_live" from MAIN_DEV, one instance of keep-alive is completed, and "step 105" is then jumped to. In a normal link state, it is cycled between "S350" and "S360".

At S370, DEC_DEV or ENC_DEV sends a groupcast packet to a specified groupcast address, such as 238.255.255.255, sends a "hi" signaling message to the groupcast address to search for MAIN_DEV, waits for acknowledgement "ack_hi" (the message is unicasted), and if "ack_hi" is not received, continues to send a groupcast packet "hi" at an interval of some time.

At S380, after receiving the "ack_hi" message, DEC_DEV or ENC_DEV extracts the network IP address of MAIN_DEV therefrom, and saves the IP address in the present device, and "S2" is then jumped to.

The above-mentioned registration message "regdev" in step S3 is the first registration information or second registration information in the above-mentioned embodiment, and the above-mentioned "ack_regdev" is the acknowledgement information returned to the video encoding device or the video decoding device by the video conference management main device according to the first registration information or second registration information. The above-mentioned "live" message in step S350 is the first keep-alive information or second keep-alive information in the above-mentioned embodiment, and the above-mentioned corresponding "ack_live" message is the first keep-alive acknowledgement message or second keep-alive acknowledgement message. The above-mentioned "hi" signaling message in step S370 is the first addressing information or second addressing information in the above-mentioned embodiment, and the above-mentioned corresponding "ack_hi" is the first addressing acknowledgement message or second addressing acknowledgement message.

The establishment of a connection relationship between each of the video encoding device and the video decoding device, and the video conference management main device can be realized by the above-mentioned steps S310 to S380.

### Particular embodiment two

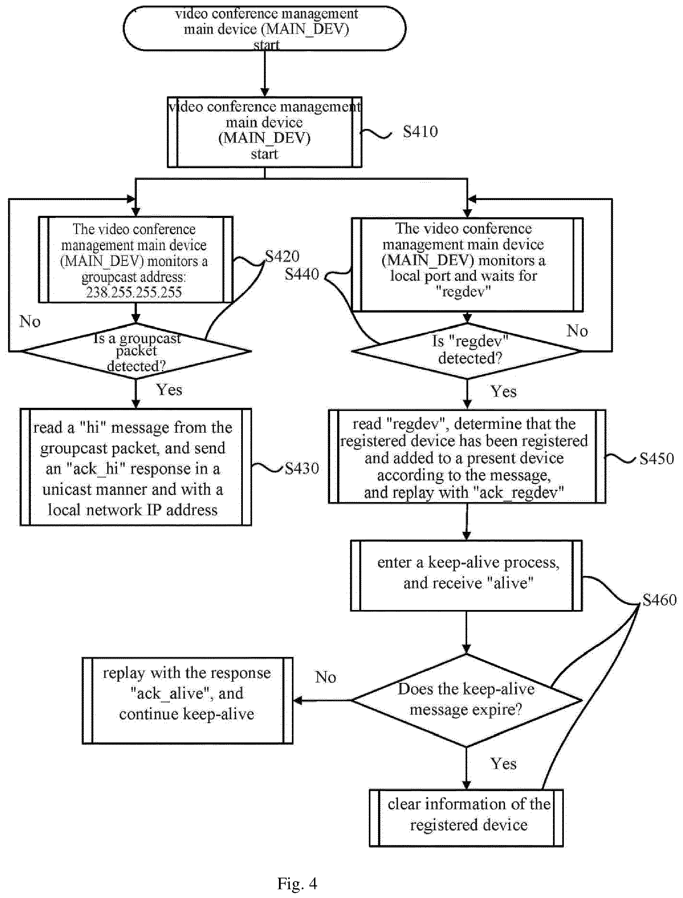

The present particular embodiment provides a process of a video processing system establishing a connection relationship between a video conference management main device and each of a video encoding device and a video decoding device. Fig. 4 is a flowchart of the connection relationship establishment in the video processing system provided in the particular embodiment of the present application. As shown in fig. 4, the process of establishing a connection relationship between the video conference management main device and each of the video encoding device and the video decoding device is as follows.

At S410, MAIN_DEV is started and carries out a self-check, and a service module is started after the self-check is completed.

At S420, MAIN_DEV monitors a specified groupcast address, such as 238.255.255.255, receives a discovery message "hi", and repeatedly carries out monitoring when not receiving the "hi" message.

At S430, after receiving the "hi" message, MAIN_DEV makes an acknowledgement in a unicast manner after making an acknowledgement "ack_hi" with adding information such as an IP address of MAIN_DEV and a registration port into the "ack_hi" message.

At S440, MAIN_DEV also monitors a registration unicast message "regdev".

At S450, after receiving "regdev", MAIN_DEV reads information from the message, with "regdev" carrying the type of a device to be registered at, part of capability parameters, etc., and MAIN_DEV saves registration information, and replies with "ack_regdev", where a keep-alive period is packed in "ack_regdev".

At S460, MAIN_DEV enters a keep-alive flow, receiving a keep-alive message "live" of each registered DEC_DEV or ENC_DEV device, determining whether the message expires, and if the message expires, clearing device information.

The establishment of a connection relationship between the video conference management main device and each of the video encoding device and the video decoding device can be realized by the above-mentioned steps S410 to S460.

The application of the video processing system of the embodiment in a practical video conference is illustrated by way of multiple particular embodiments hereinbelow.

### Particular embodiment three

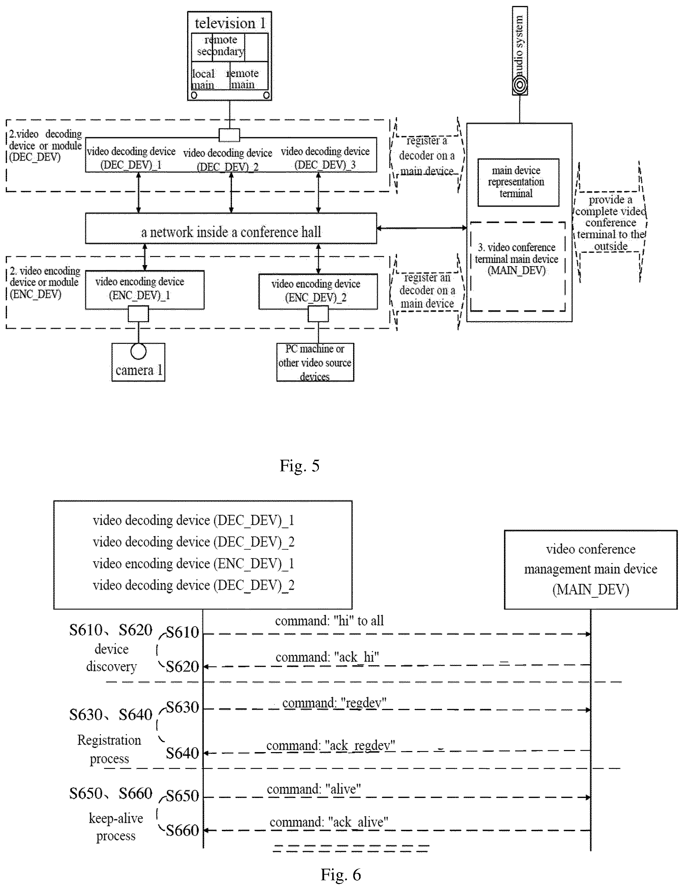

The present particular embodiment provides a practical application scenario of a video processing system. Fig. 5 is schematic structure diagram of the video processing system provided in the particular embodiment of the present application. As shown in fig. 5, in the present particular embodiment, decoding and outputting are realized in local main video decoding, remote main video decoding, local secondary video decoding or remote secondary video decoding by using one physical device, i.e. a display device. In local main video coding and local secondary video coding, video inputs from two physical devices, i.e. a camera and a PC, are correspondingly received.

There are three DEC_DEVs in the video processing system as shown in fig. 5, which are corresponding DEC_DEV_1, DEC_DEV_2 and DEC_DEV_3. The above-mentioned three DEC_DEVs are realized on the same hardware entity. The three decoding devices are provided on one hardware device "television 1", and a display output part can synthesize multiple screens. Fig. 5 shows a situation where three screens are output with a secondary video being opened after a conference is joined, and the three screens can also be displayed in a switched manner, that is, output modes such as a local main video being displayed in a large screen, a remote main video being displayed in a large screen, a remote secondary video being displayed in a large screen and three screens being displayed in triangular arrangement can be switched.

Two ENC_DEVs are further provided in the video processing system as shown in fig. 5, which are corresponding ENC_DEV_1 and ENC_DEV_2. The above-mentioned two ENC_DEVs respectively realize video code stream inputs on two different hardware entities, where ENC_DEV_1 is connected to a camera for an input, responsible for local main video coding, and then sends the input to MAIN_DEV to pack same into a real-time transport protocol (RTP) packet and sends same to a remote device, and ENC_DEV_2 is connected to a computer or another video source device, can serve for local secondary video coding, and then send an input to MAIN_DEV to pack same into an RTP packet and sends same to the remote device.

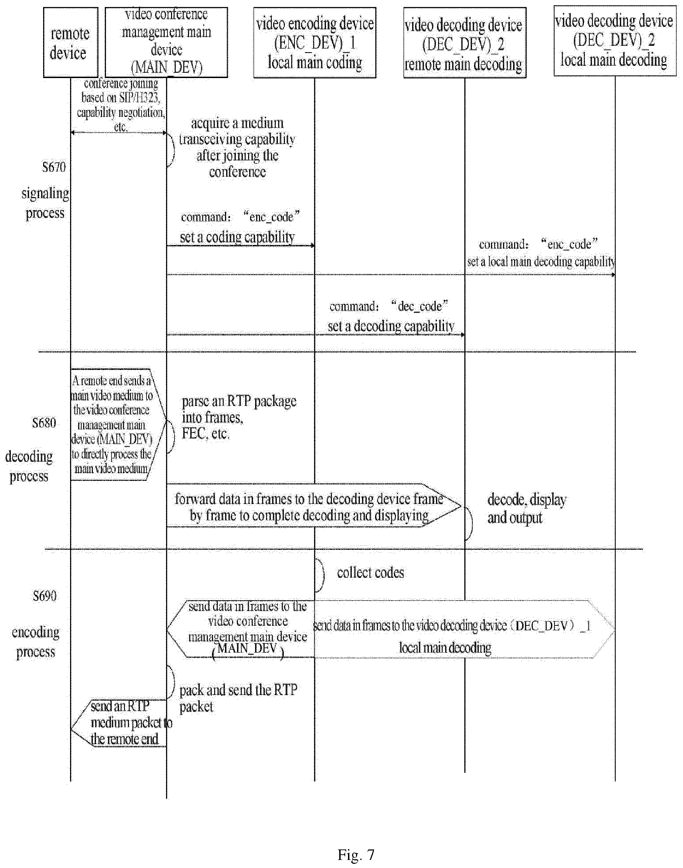

Fig. 6 is a schematic interaction diagram of the registration management in the video processing system of the particular embodiment of the present application. Fig. 7 is a schematic interaction diagram of coding or decoding in the video processing system of the particular embodiment of the present application. As shown in fig. 6 and fig. 7, an operating flow of the video processing system in the particular embodiment is as follows.

At S610, MAIN_DEV is searched for and found. This step is stared when a device is used for the first time, or a network IP address of MAIN_DEV is not configured, or the network IP address of MAIN_DEV has been configured but registration fails. At this step, DEC_DEV_1, DEC_DEV_2, DEC_DEV_3, ENC_DEV_1 and ENC_DEV_2 send "hi" signaling to a specified groupcast address such as 238.255.255.255, and a main objective of "hi" is to let MAIN_DEV find it.

At S620, the MAIN_DEV device makes an acknowledgement "ack_hi" after receiving the message "hi" from the groupcast address 238.255.255.255, with a main objective of "ack_hi" being to let DEC_DEV_1, DEC_DEV_2, DEC_DEV_3, ENC_DEV_1 and ENC_DEV_2 learn the network IP address of the MAIN_DEV device, in order to facilitate subsequent registration.

At S630, registration is carried out, where DEC_DEV_1, DEC_DEV_2, DEC_DEV_3, ENC_DEV_1 and ENC_DEV_2 each sends a registration request "regdev" to MAIN_DEV, the signaling mainly carries a media port, which is an internal media receiving port as for DEC_DEV and is an external media sending port as for ENC_DEV, and receiving and sending are mainly aimed at the MAIN_DEV device.

At S640, a response is made to the registration process, where MAIN_DEV responds to the registration requests, sending a response "ack_regdev" to each of DEC_DEV_1, DEC_DEV_2, DEC_DEV_3, ENC_DEV_1 and ENC_DEV_2, which represents successful registration, "ack_regdev" carries a keep-alive period, and in the keep-alive period, MAIN_DEV keeps considering the devices available.

At S650, keep-alive is carries out, where DEC_DEV_1, DEC_DEV_2, DEC_DEV_3, ENC_DEV_1 and ENC_DEV_2 each sends a link keep-alive request "alive" to MAIN_DEV.

At S660, a response is made to the keep-alive process, where MAIN_DEV responds to the link keep-alive requests, sending "ack_alive" to each of DEC_DEV_1, DEC_DEV_2, DEC_DEV_3, ENC_DEV_1 and ENC_DEV_2, so as to complete one instance of keep-alive. It should be aware that when MAIN_DEV does not receive an "alive" message in the keep-alive period, MAIN_DEV would ask for keep-alive, sending "alive-ask" to each of DEC_DEV_1, DEC_DEV_2, DEC_DEV_3, ENC_DEV_1 and ENC_DEV_2, and if MAIN_DEV still cannot receive the " alive" message, device information would be cleared. The "alive-ask" message has two objectives, one being to ensure keep-alive expires. As for the other objective, "alive-ask" should be sent once when MAIN_DEV needs to use the decoding device DEC_DEV or the encoding device ENC_DEV, and after "alive-ask" is received, it can be determined that the device is available right now.

At S670, H323 or session initiation protocol (SIP) calling signaling interaction is carried out between a remote device and a local MAIN_DEV device, and common coding and decoding capabilities are obtained from interaction after conference joining signaling interaction is completed. The common coding capability obtained is issued to the main video encoding device ENC_DEV_1 and the main video decoding device DEC_DEV_1, because a local main video also needs to be displayed after being decoded. MAIN_DEV sends a command: "enc_code" to each of ENC_DEV_1 and DEC_DEV_1 for a coding capability. The common decoding capability obtained is issued to DEC_DEV_2 which is responsible for remote main video decoding. MAIN_DEV sends a command: "dec_code" to DEC_DEV_2 for a decoding capability. ENC_DEV_1, DEC_DEV_1 and DEC_DEV_2 receive respective enc_code and dec_code, and complete device initialization for joining a conference according to a content initialization codec.

At S680, a main video sent from a remote end is decoded, where MAIN_DEV carries out corresponding media service processes such as unpacking the RTP package and forward error correction (FEC) after receiving the main video code stream RTP package sent from the remote end, a data packet having frames is finally formed, after the data packet is in frames, the data packet is sent to the DEC_DEV_2 device to be decoded, and the data packet is output and displayed after being decoded by DEC_DEV_2.

At S690, the local main video is sent to the remote end after being coded, where ENC_DEV_1 collects data from the camera and then codes same according to the common coding capability, and sends frames of coded data to two modules, i.e. MAIN_DEV and DEC_DEV_1, the data sent to MAIN_DEV is packed by the MAIN_DEV device module into an RTP package and then is sent to the remote end, and the data sent to DEC_DEV_1 is used for being locally decoded for displaying and outputting.

By the steps S1 to S9 above, video coding and decoding in a video conference can be realized. Similar to the above-mentioned steps, the decoding and displaying of the secondary video can be completed by DEC_DEV_3. After a secondary video capability is determined when a call has the secondary video therein, the secondary video capability is issued to a corresponding encoding device and decoding device, where if it is a secondary stream receiving end, the secondary video capability is sent to DEC_DEV_3, and if it is a secondary stream sending end, the secondary video capability is sent to ENC_DEV_2. A media is also processed similarly to media receiving and sending of a main video being completed, packing a secondary video code stream, etc.

### Particular embodiment four

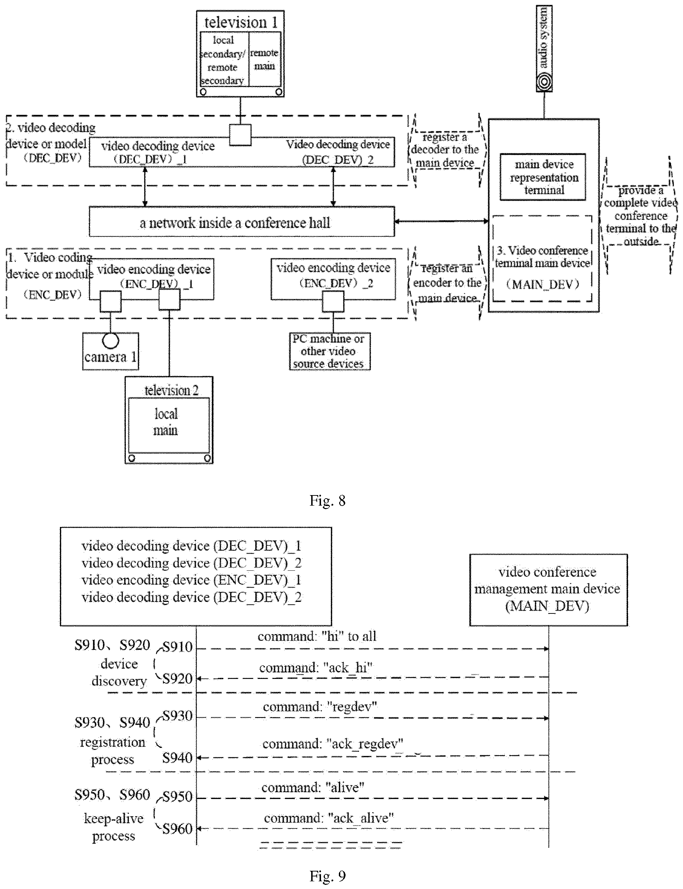

The present particular embodiment provides another practical application scenario of a video processing system. Fig. 8 is schematic structure diagram of the video processing system provided in the particular embodiment of the present application. As shown in fig. 8, in the present particular embodiment, remote main video decoding, local secondary video decoding or remote secondary video decoding are realized on a physical device DEC_DEV, and main video coding and secondary video coding are respectively realized on two physical devices ENC_DEVs. A main video of a local conference hall and a main video or secondary video of a remote conference hall are separately displayed and output on two televisions, one of which is used for specially displaying a local main video, and the other one of which is used for displaying a remote main video or secondary video. The remote main video or secondary video can be synthesized into two screens for displaying, or other modes, such as monopolizing a screen, can be switched. The local main video in the above-mentioned particular embodiment does not need to be decoded, where a local main encoding device ENC_DEV is directly connected to a television to output an image.

There are three video encoding devices and video decoding devices in the video processing system as shown in fig. 8, where DEC_DEV_1 and DEC_DEV_2 are realized on the same physical device (a television 1), with DEC_DEV_1 being responsible for remote main video decoding, and DEC_DEV_2 being responsible for remote or local secondary video decoding. A decoded image is output to the "television 1" and can be synthesized into two screens as shown in fig. 5. It is also possible to separately display the remote main video, or separately display the local secondary video or remote secondary video in a large screen, etc. The logic encoding device ENC_DEV_1 is realized on a separate physical device, and is responsible for local main video coding. The physical device of the logic encoding device ENC_DEV_1 involves both a video input and a video output, and may have two high definition multimedia interfaces (HDMIs), one of which is for an input, and the other one of which is for an output. One HDMI is connected to a "camera 1" for an input of a video source, and the other HDMI is connected to a "television 2" for an output, such that after collecting data, the "camera 1" can directly output the data to the "television 2" to display the local main video. The logic encoding device ENC_DEV_2 is realized on a separate physical device, and is responsible for local secondary video decoding. The local secondary video needs to display an image that can be output by the "television 1" after being decoded.

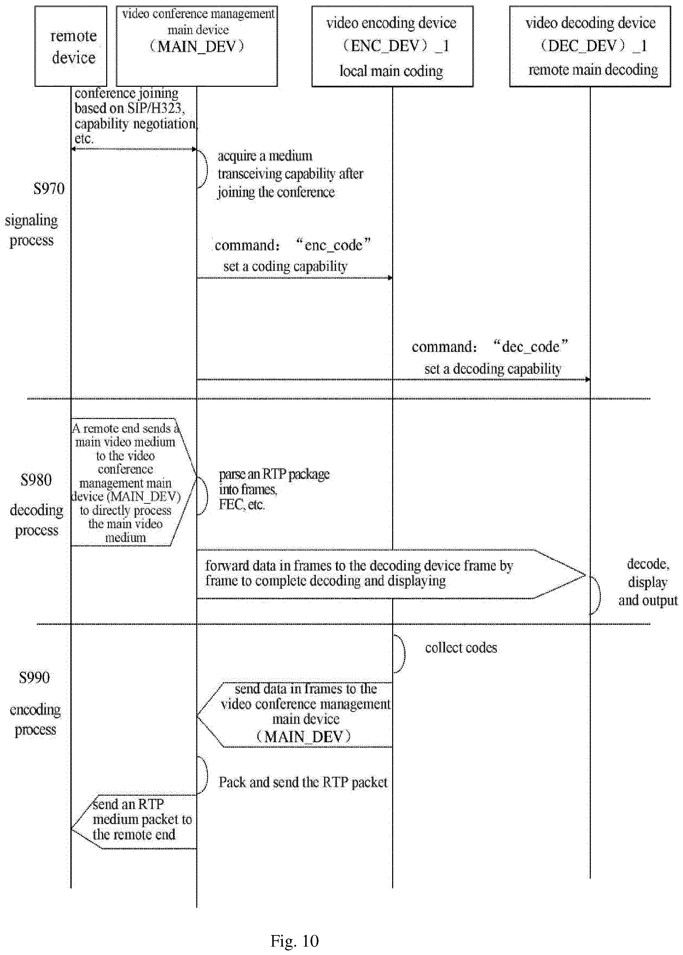

Fig. 9 is a schematic interaction diagram of the registration management in the video processing system of the particular embodiment of the present application. Fig. 10 is a schematic interaction diagram of coding or decoding in the video processing system of the particular embodiment of the present application. As shown in fig. 9 and fig. 10, an operating flow of the video processing system in the particular embodiment is as follows.

At S910, MAIN_DEV is searched for and found, where DEC_DEV_1, DEC_DEV_2, ENC_DEV_1 and ENC_DEV_2 send "hi" signaling to a specified groupcast address such as 238.255.255.255, and a main objective of "hi" is to let MAIN_DEV find it.

At S920, the MAIN_DEV device makes an acknowledgement "ack_hi" after receiving the message "hi" from the groupcast address 238.255.255.255, with a main objective of "ack_hi" being to let DEC_DEV_1, DEC_DEV_2, ENC_DEV_1 and ENC_DEV_2 learn the network IP address of the MAIN_DEV device, in order to facilitate subsequent registration.

At S930, registration is carried out, where DEC_DEV_1, DEC_DEV_2, ENC_DEV_1 and ENC_DEV_2 each send a registration request "regdev" to MAIN_DEV, the signaling mainly carries a media port, which is an internal media receiving port as for DEC_DEV and is an external media sending port as for ENC_DEV, and receiving and sending are mainly aimed at the MAIN_DEV device.

At S940, a response is made to the registration process, where MAIN_DEV responds to the registration requests, sending a response "ack_regdev" to each of DEC_DEV_1, DEC_DEV_2, ENC_DEV_1 and ENC_DEV_2, which represents successful registration.

At S950, keep-alive is carries out, where DEC_DEV_1, DEC_DEV_2, ENC_DEV_1 and ENC_DEV_2 each sends a link keep-alive request "alive" to MAIN_DEV.

At S960, a response is made to the keep-alive process, where MAIN_DEV responds to the link keep-alive requests, sending "ack_alive" to each of DEC_DEV_1, DEC_DEV_2, ENC_DEV_1 and ENC_DEV_2, so as to complete one instance of keep-alive.

At S970, H323 or SIP calling signaling interaction is carried out between a remote device and a local MAIN_DEV device, and common coding and decoding capabilities are obtained from interaction after conference joining signaling interaction is completed. The common coding capability obtained is issued to the main video encoding device ENC_DEV_1, and MAIN_DEV sends a command: "enc_code" to ENC_DEV_1 for a coding capability. The common decoding capability obtained is issued to DEC_DEV_1 which is responsible for remote main video decoding. MAIN_DEV sends a command: "dec_code" to DEC_DEV_1 for a decoding capability. ENC_DEV_1 and DEC_DEV_1 receive respective enc_code and dec_code, and complete device initialization for joining a conference according to a content initialization codec.

At S980, a main video sent from a remote end is decoded, where MAIN_DEV carries out corresponding media service processes such as unpacking the RTP package and FEC after receiving the main video code stream RTP package sent from the remote end, a data packet having frames is finally formed, after the data packet is in frames, the data packet is sent to the DEC_DEV_1 device to be decoded, and the data packet is output and displayed after being decoded by DEC_DEV_1.

At S990, the local main video is sent to the remote end after being coded, where ENC_DEV_1 collects data from the camera and then codes same according to the common coding capability, and sends frames of coded data to MAIN_DEV, and the data is then packed into an RTP packet by the MAIN_DEV device module and sent to the remote end.

The above-mentioned deployment method for the video processing system is suitable for a distance education scenario, where the "television 1" displays a remote main video and secondary video and is placed in the front of a classroom, so that all students can see the remote main video and secondary video, and the "television 2" displays a local main video, which can specially be watched by a teacher in a local conference hall.

### Particular embodiment five

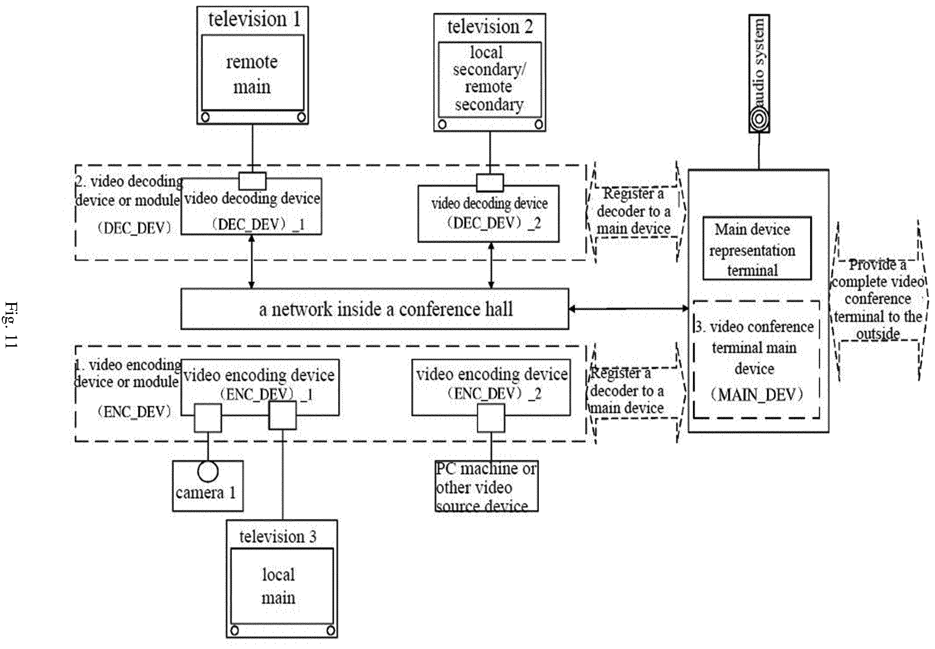

The present particular embodiment further provides another practical application scenario of a video processing system. Fig. 11 is schematic structure diagram of the video processing system provided in the particular embodiment of the present application. As shown in fig. 11, remote main video decoding, local secondary video decoding or remote secondary video decoding are realized on two physical devices DEC_DEV. Local main video coding and local secondary video coding are respectively realized on two physical devices ENC_DEV. A local main video, a remote main video and a secondary video are respectively output on three display devices.

There are actually four physical devices in total for coding and decoding, where DEC_DEV_1 and DEC_DEV_2 are realized on different physical devices, and ENC_DEV_1 and ENC_DEV_2 are also realized on different physical devices. DEC_DEV_1 and DEC_DEV_2 are correspondingly connected to the "television 1" and the "television 2", so as to display the remote main video and a secondary video, with the secondary video including a local secondary video and a remote secondary video. ENC_DEV_1 is a encoding device, which collects an image from the "camera 1" and further outputs and displays the image to a "television 3" as a local main video. The multiple-display output in the particular embodiment can also be connected to a television by using a display matrix so as to realize free switching, which is very suitable for a large conference hall and teacher deployment in distance education.

### Particular embodiment six

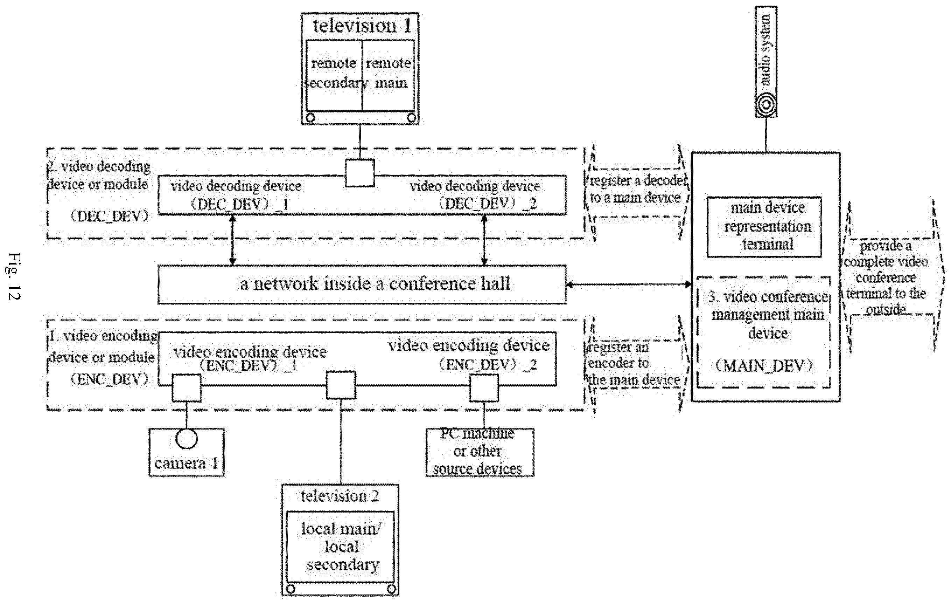

The present particular embodiment further provides another practical application scenario of a video processing system. Fig. 12 is schematic structure diagram of the video processing system provided in the particular embodiment of the present application. As shown in fig. 12, there are actually two physical devices in total for coding and decoding, where DEC_DEV_1 and DEC_DEV_2 are realized on the same physical device, and ENC_DEV_1 and ENC_DEV_2 are also realized on the same physical device. The physical device of DEC_DEV_1 and DEC_DEV_2 is connected to the "television 1" for outputting, and can decode a remote main video and a remote secondary video and display same on the "television 1", where the remote main video and the remote secondary video can be synthesized into two screens to be displayed and output at the same time, or can be respectively switched in a large screen, etc. The physical device of ENC_DEV_1 and ENC_DEV_2 is connected to the "television 2", which can respectively display an image of the local main video and an image of the local secondary video.

### Particular embodiment seven

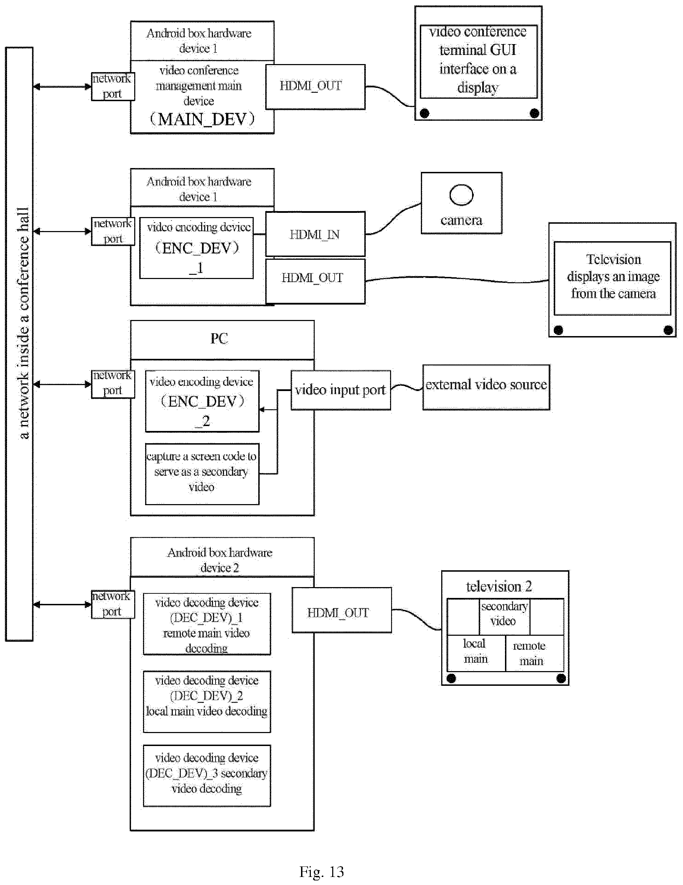

The present particular embodiment further provides another practical application scenario of the video processing system. Fig. 13 is schematic structure diagram of the video processing system provided in the particular embodiment of the present application. As shown in fig. 13, a main device MAIN_DEV is realized by using an "Android box hardware device 1". The functions of the main device MAIN_DEV are mainly for implementation of services of a video conference terminal, and graphical user interface (GUI) operations. Services of MAIN_DEV can be realized by installing a piece of Android application (app) software in the "Android box hardware device 1". The "Android box hardware device 1" is externally connected to a small display for displaying GUI operation control, etc. A video conference terminal can also be directly operated and controlled by using a touch-screen display.

Local main video coding is realized by ENC_DEV_1. It can be seen from fig. 13 that an "FPGA+ARM hardware architecture" is used. The ARM is used to run a Linux system, and the FPGA is specially for the processing of hardware coding data. It is necessary to develop a set of software including an FPGA coding control program burnt into the FPGA, and to install a Linux program realized by using media services of ENC_DEV_1 into the Linux system, so as to form a powerful coder, which is connected to a camera, and also carries out echoing to a "television 1" as the display of a local main video. ENC_DEV_1 can also be realized by using a hardware device such as an Android box and a PC.

Local secondary video coding is realized by using ENC_DEV_2. ENC_DEV_2 is realized by using a "PC". If the "PC" is a PC having a Windows system, it is possible to develop a set of software that is run on the Windows system. The main function of the software is virtualizing the "PC" into an ENC_DEV device, which collects screen codes or collects input video code stream codes of a third party as a secondary video.

Three decoding devices, i.e. DEC_DEV_1, DEC_DEV_2 and DEC_DEV_3, are realized by using an "Android box hardware device 2", which decodes a remote main video correspondingly to DEC_DEV_1, decodes a local main video correspondingly to DEC_DEV_2, respectively. That is, a local main video, i.e. a code stream of ENC_DEV_1, is decoded, and DEC_DEV_2 decodes a secondary video. An output can be synthesized into three screens, or can be respectively switched in a large screen, etc.

Solutions for the realization of the hardware entity in the particular embodiment includes, but not limited to the above solutions, and there may be other combinations to realize different coding and decoding devices, etc. By unlimited combinations, such as MAIN_DEV and a decoding device DEC_DEV being realized on a hardware entity, various requirements are met.

### Embodiment two

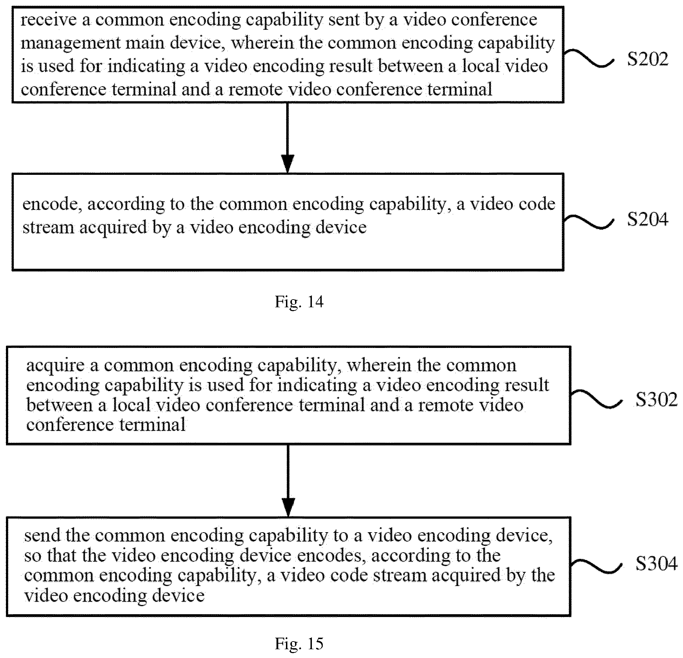

Provided in the present embodiment is a video processing method. Fig. 14 is a flowchart of the video processing method provided in the embodiment of the present application. As shown in fig. 14, the method comprises the following steps.

At step S202, a common coding capability sent by a video conference management main device is received, the common coding capability being used for indicating a video coding result between a local video conference terminal and a remote video conference terminal.

At step 204, a video code stream acquired by the video encoding device is coded according to the common coding capability.

According to the method in the present embodiment, a video conference management main device takes a video coding result between a local video conference terminal and a remote video conference terminal as a common coding capability, and sends the common coding capability to a video encoding device, so that the video encoding device processes a video according to the above-mentioned common coding capability. Therefore, the method in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

An execution entity for the above-mentioned steps is a video encoding device.

In an embodiment, before the step of receiving the common coding capability sent by the video conference management main device, the above-mentioned step 202 comprises: sending a first registration request to the video conference management main device, the first registration request being used for instructing the video conference management main device to establish a connection with video encoding device.

In an embodiment, before the step of sending the first registration request to the video conference management main device, the above-mentioned step 202 comprises: sending first addressing information to a preset address, the first addressing information being used for instructing the video conference management main device to return first addressing acknowledgement information to the video encoding device; and sending the first registration request to the video conference management main device according to the first addressing acknowledgement information.

In an embodiment, after the step of sending the first registration request to the video conference management main device, the above-mentioned step 202 comprises: sending first keep-alive information to the video conference management main device within a preset period, the first keep-alive information being used for instructing the video conference management main device to return first keep-alive acknowledgement information to the video encoding device.

In an embodiment, the step of receiving the common coding capability sent by the video conference management main device in the above-mentioned step 202 comprises: sending coding capability information of the video encoding device to the video conference management main device, the coding capability information being used for instructing the video conference management main device to send the common coding capability to the video encoding device.

In an embodiment, the video code stream acquired by the video encoding device comprises at least one of: a local main video code stream and a local secondary video code stream.

In an embodiment, when the system further comprises at least one video decoding device, the method further comprises: receiving error information sent by the video conference management main device and coding the error information, the error information being sent to the video conference management main device by the video decoding device, and the information is used for indicating that a decoding error occurs in the video decoding device.

According to the description of the embodiment above, the above-mentioned method of the embodiment can be implemented by software plus a necessary universal hardware platform, and can certainly be realized by hardware. On the basis of such understanding, the technical solution of the present application in essence may be embodied in the form of a software product. The computer software product is stored in a storage medium (for example, an ROM/RAM, a magnetic disk and an optical disk), and includes several instructions used to cause a terminal device (which may be a mobile phone, a computer, a server or a network device) to implement the method of the embodiments of the present application.

### Embodiment three

Provided in the present embodiment is a video processing method. Fig. 15 is flowchart of the video processing method provided in the embodiment of the present application. As shown in fig. 15, the method comprises the following steps.

At step S302, a common coding capability is acquired, the common coding capability being used for indicating a video coding result between a local video conference terminal and a remote video conference terminal.

At step S304, the common coding capability is sent to the video encoding device, so that the video encoding device codes, according to the common coding capability, a video code stream acquired by the video encoding device.

According to the method in the embodiment, a video conference management main device takes a video coding result between a local video conference terminal and a remote video conference terminal as a common coding capability, and sends the common coding capability to a video encoding device, so that the video encoding device processes a video according to the above-mentioned common coding capability. Therefore, the method in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

An execution entity for the above-mentioned steps is a video conference management main device.

In an embodiment, before the step of sending the common coding capability to the video encoding device, the above-mentioned step S304 comprises: receiving a first registration request sent by the video encoding device; and establishing a connection with the video encoding device in response to the first registration request.

In an embodiment, before the step of receiving the first registration request sent by the video encoding device, the above-mentioned step S304 comprises: acquiring first addressing information sent to a preset address by the video encoding device; returning first addressing acknowledgement information to the video encoding device according to the first addressing information; and receiving the first registration request sent by the video encoding device according to the first addressing acknowledgement information.

In an embodiment, after the step of receiving the first registration request sent by the video encoding device, the above-mentioned step S304 comprises: receiving first keep-alive information sent by the video encoding device within a preset period; and returning first keep-alive acknowledgement information to the video encoding device according to the first keep-alive information.

In an embodiment, the step of sending the common coding capability to the video encoding device in the above-mentioned step S304 comprises: acquiring coding capability information of the video encoding device, and sending a common coding capability to the video encoding device according to the coding capability information.

In an embodiment, the video code stream acquired by the video encoding device comprises at least one of: a local main video code stream and a local secondary video code stream.

In an embodiment, when the system further comprises at least one video decoding device, the method further comprises: receiving error information sent by the video decoding device, and sending the error information to the video encoding device to code the error information, the error information being used for indicating that a decoding error occurs in the video decoding device.

According to the description of the embodiment above, the above-mentioned method of the embodiment can be implemented by software plus a necessary universal hardware platform, and can certainly be realized by hardware. On the basis of such understanding, the technical solution of the present application in essence may be embodied in the form of a software product. The computer software product is stored in a storage medium (for example, an ROM/RAM, a magnetic disk and an optical disk), and includes several instructions used to cause a terminal device (which may be a mobile phone, a computer, a server or a network device) to implement the method of the embodiments of the present application.

### Embodiment four

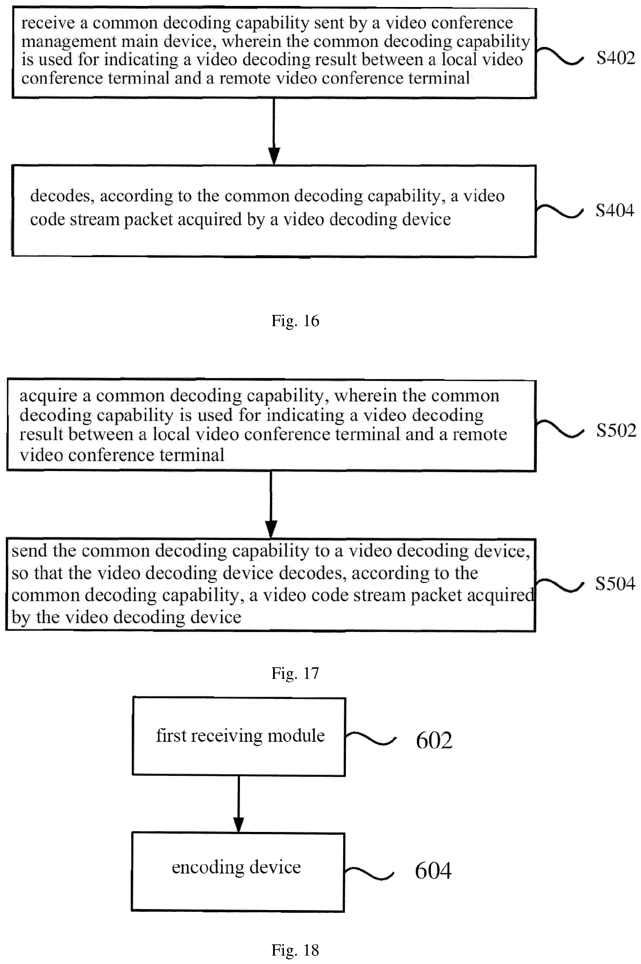

Provided in the present embodiment is a video processing method. Fig. 16 is flowchart of the video processing method provided in the embodiment of the present application. As shown in fig. 16, the method comprises the following steps.

At step S402, a common decoding capability sent by the video conference management main device is received, the common decoding capability being used for indicating a video decoding result between a local video conference terminal and a remote video conference terminal.

At step S404, a video code stream packet acquired by the video decoding device is decoded according to the common decoding capability.

According to the method in the embodiment, a video conference management main device takes a video decoding result between a local video conference terminal and a remote video conference terminal as a common decoding capability, and sends the common decoding capability to a video decoding device, so that the video decoding device processes a video according to the above-mentioned common decoding capability. Therefore, the method in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

An execution entity for the above-mentioned steps is a video decoding device.

In an embodiment, before the step of receiving the common decoding capability sent by the video conference management main device, step S402 mentioned above comprises: sending a second registration request to the video conference management main device, the second registration request being used for instructing the video conference management main device to establish a connection with video decoding device.

In an embodiment, before the step of sending the second registration request to the video conference management main device, step S402 mentioned above comprises: sending second addressing information to a preset address, the second addressing information being used for instructing the video conference management main device to return second addressing acknowledgement information to the video decoding device; and sending the second registration request to the video conference management main device according to the second addressing acknowledgement information.

In an embodiment, after the step of sending the second registration request to the video conference management main device, step S402 mentioned above comprises: sending second keep-alive information to the video conference management main device within a preset period, the second keep-alive information being used for instructing the video conference management main device to return second keep-alive acknowledgement information to the video decoding device.

In an embodiment, before the step of receiving the common decoding capability sent by the video conference management main device, step S402 mentioned above comprises: sending decoding capability information of the video decoding device to the video conference management main device, the decoding capability information being used for instructing the video conference management main device to send the common decoding capability to the video decoding device.

In an embodiment, the video code stream acquired by the video decoding device comprises at least one of: a local main video code stream packet, a local secondary video code stream packet, a remote main video code stream packet and a remote secondary video code stream packet.

In an embodiment, when the system further comprises at least one video encoding device, the video code stream acquired by the video decoding device is sent by at least one of the following subjects: the video conference management main device and video encoding device.

In an embodiment, when the system further comprises at least one video encoding device, the method further comprises: sending error information to the video conference management main device, so that the video conference management main device sends the error information to the video encoding device to code the error information, the error information being used for indicating that a decoding error occurs in the video decoding device.

According to the description of the embodiment above, the above-mentioned method of the embodiment can be implemented by software plus a necessary universal hardware platform, and can certainly be realized by hardware. On the basis of such understanding, the technical solution of the present application in essence may be embodied in the form of a software product. The computer software product is stored in a storage medium (for example, an ROM/RAM, a magnetic disk and an optical disk), and includes several instructions used to cause a terminal device (which may be a mobile phone, a computer, a server or a network device) to implement the method in the embodiments of the present application.

### Embodiment five

Provided in the present embodiment is a video processing method. Fig. 17 is flowchart of the video processing method provided in the embodiment of the present application. As shown in fig. 17, the method comprises the following steps.

At step S502, a common decoding capability is acquired, the common decoding capability being used for indicating a video decoding result between a local video conference terminal and a remote video conference terminal.

At step S504, the common decoding capability is sent to a video decoding device, so that the video decoding device decodes, according to the common decoding capability, a video code stream packet acquired by the video decoding device.

According to the method in the embodiment, a video conference management main device takes a video decoding result between a local video conference terminal and a remote video conference terminal as a common decoding capability, and sends the common decoding capability to a video decoding device, so that the video decoding device processes a video according to the above-mentioned common decoding capability. Therefore, the method in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

An execution entity for the above-mentioned steps is the video conference management main device.

In an embodiment, before the step of sending the common decoding capability to the video decoding device, step S504 mentioned above comprises: receiving a second registration request sent by the video decoding device; and in response to second registration request, establishing a connection with video decoding device.

In an embodiment, before the step of receiving the first registration request sent by the video decoding device, step S504 mentioned above comprises: acquiring second addressing information sent to a preset address by the video decoding device; returning second addressing acknowledgement information to the video decoding device according to the second addressing information; and receiving the second registration request sent by the video decoding device according to the second addressing acknowledgement information.

In an embodiment, after the step of receiving the second registration request sent by the video decoding device, step S504 mentioned above comprises: receiving second keep-alive information sent by the video decoding device within a preset period; and returning second keep-alive acknowledgement information to the video decoding device according to the second keep-alive information.

In an embodiment, the step of sending the common decoding capability to the video decoding device at step S504 mentioned comprises: acquiring decoding capability information of the video decoding device, and sending a common decoding capability to the video decoding device according to the decoding capability information.

In an embodiment, the video code stream packet acquired by the video decoding device comprises at least one of: a local main video code stream packet and a local secondary video code stream packet.

In an embodiment, when the system further comprises at least one video encoding device, the video code stream acquired by the video decoding device is sent by at least one of the following subjects: the video conference management main device and video encoding device.

In an embodiment, when the system further comprises at least one video decoding device, the method further comprises: receiving error information sent by the video decoding device, and sending the error information to the video encoding device to code the error information, the error information being used for indicating that a decoding error occurs in the video decoding device.

According to the description of the embodiment above, the above-mentioned method of the embodiment can be implemented by software plus a necessary universal hardware platform, and can certainly be realized by hardware, on the basis of such understanding, the technical solution of the present application in essence may be embodied in the form of a software product. The computer software product is stored in a storage medium (for example, an ROM/RAM, a magnetic disk and an optical disk), and includes several instructions used to cause a terminal device (which may be a mobile phone, a computer, a server or a network device) to implement the method in the embodiments of the present application.

### Embodiment six

Also provided in the present embodiment is a video processing apparatus. The apparatus is used for realizing the above-mentioned embodiments and preferred embodiments. The description that has been made will not be repeated here. As used below, the term "module" may implement a combination of software and/or hardware that achieves a predetermined function. Although the apparatuses described in the embodiments below are preferably implemented in software, implementation of hardware or a combination of software and hardware is also possible and conceived.

Fig. 18 is a structure diagram of the video processing apparatus in the embodiment of the present application. As shown in fig. 18, the apparatus comprises: a first receiving module 601 configured to receive common coding capability sent by a video conference management main device, the common coding capability being used for indicating a video coding result between a local video conference terminal and a remote video conference terminal; and a coding module 602 configured to code, according to the common coding capability, a video code stream acquired by the video encoding device.

According to the apparatus in the embodiment, a video conference management main device takes a video coding result between a local video conference terminal and a remote video conference terminal as a common coding capability, and sends the common coding capability to a video encoding device, so that the video encoding device processes a video according to the above-mentioned common coding capability. Therefore, the apparatus in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

In an embodiment, before the step of receiving the common coding capability sent by the video conference management main device, the above-mentioned first receiving module 601 involves: sending a first registration request to the video conference management main device, the first registration request being used for instructing the video conference management main device to establish a connection with video encoding device.

In an embodiment, before the step of sending the first registration request to the video conference management main device, the above-mentioned first receiving module 601 involves: sending first addressing information to a preset address, the first addressing information being used for instructing the video conference management main device to return first addressing acknowledgement information to the video encoding device; and sending the first registration request to the video conference management main device according to the first addressing acknowledgement information.

In an embodiment, after the step of sending the first registration request to the video conference management main device, the above-mentioned first receiving module 601 involves: sending first keep-alive information to the video conference management main device within a preset period, the first keep-alive information being used for instructing the video conference management main device to return first keep-alive acknowledgement information to the video encoding device.

In an embodiment, the step of the above-mentioned first receiving module 601 receiving the common coding capability sent by the video conference management main device comprises: sending coding capability information of the video encoding device to the video conference management main device, the coding capability information being used for instructing the video conference management main device to send the common coding capability to the video encoding device.

In an embodiment, the video code stream acquired by the video encoding device comprises at least one of: a local main video code stream and a local secondary video code stream.

In an embodiment, when the system further comprises at least one video decoding device, the method further comprises: receiving error information sent by the video conference management main device and coding the error information, the error information being sent to the video conference management main device by the video decoding device, and the error information being used for indicating that a decoding error occurs in the video decoding device.

The above-mentioned modules may be realized by software or hardware. As for the latter, the modules may be realized in, but not limited to the following manners: the above-mentioned modules are all located in the same processor; or the above-mentioned modules are respectively located in different processors in the form of any combination.

### Embodiment seven

Also provided is a video processing apparatus in the present embodiment. The apparatus is used for realizing the above-mentioned embodiments and preferred embodiments. The description that has been made will not be repeated here. As used below, the term "module" may implement a combination of software and/or hardware that achieves a predetermined function. Although the devices described in the embodiments below are preferably implemented in software, implementation of hardware or a combination of software and hardware is also possible and conceived.

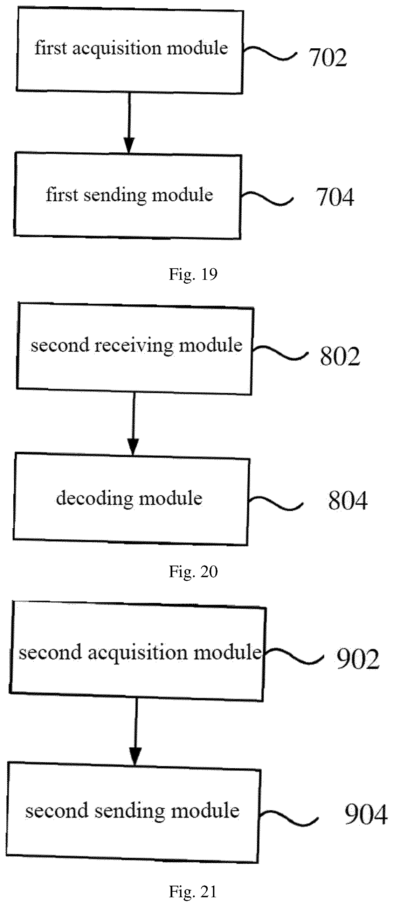

Fig. 19 is a structure diagram of the video processing apparatus in the embodiment of the present application. As shown in fig. 19, the apparatus comprises: a first acquisition module 701 configured to acquire a common coding capability, the common coding capability being used for indicating a video coding result between a local video conference terminal and a remote video conference terminal; and a first sending module 702 configured to send the common coding capability to the video encoding device, the common coding capability being used for instructing the video encoding device to code video data acquired by the video encoding device.

According to the apparatus in the embodiment, a video conference management main device takes a video coding result between a local video conference terminal and a remote video conference terminal as a common coding capability, and sends the common coding capability to a video encoding device, so that the video encoding device processes a video according to the above-mentioned common coding capability. Therefore, the apparatus in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

In an embodiment, before the step of sending the common coding capability to the video encoding device, the above-mentioned first sending module 702 involves: receiving a first registration request sent by the video encoding device; and in response to the first registration request, establishing a connection with the video encoding device.

In an embodiment, before the step of receiving the first registration request sent by the video encoding device, the above-mentioned first sending module 702 involves: acquiring first addressing information sent to a preset address by the video encoding device; returning first addressing acknowledgement information to the video encoding device according to the first addressing information; and receiving the first registration request sent by the video encoding device according to the first addressing acknowledgement information.

In an embodiment, after the step of receiving the first registration request sent by the video encoding device, the above-mentioned first sending module 702 involves: receiving first keep-alive information sent by the video encoding device within a preset period; and returning first keep-alive acknowledgement information to the video encoding device according to the first keep-alive information.

In an embodiment, the step of the above-mentioned first sending module 702 sending the common coding capability to the video encoding device comprises: acquiring coding capability information of the video encoding device, and sending a common coding capability to the video encoding device according to the coding capability information.

In an embodiment, the video code stream acquired by the video encoding device comprises at least one of: a local main video code stream and a local secondary video code stream.

In an embodiment, when the system further comprises at least one video decoding device, the method further comprises: receiving error information sent by the video decoding device, and sending the error information to the video encoding device to code the error information, the error information being used for indicating that a decoding error occurs in the video decoding device.

The above-mentioned modules may be realized by software or hardware. As for the latter, the modules may be realized in, but not limited to the following manners: the above-mentioned modules are all located in the same processor; or the above-mentioned modules are respectively located in different processors in the form of any combination.

### Embodiment eight

Also provided in the present embodiment is a video processing apparatus. The apparatus is used for realizing the above-mentioned embodiments and preferred embodiments. The description that has been made will not be repeated here. As used below, the term "module" may implement a combination of software and/or hardware that achieves a predetermined function. Although the devices described in the embodiments below are preferably implemented in software, implementation of hardware or a combination of software and hardware is also possible and conceived.

Fig. 20 is a structure diagram of the video processing apparatus in the embodiment of the present application. As shown in fig. 20, the apparatus comprises: a second receiving module 802 configured to receive common decoding capability sent by the video conference management main device, the common decoding capability being used for indicating a video decoding result between a local video conference terminal and a remote video conference terminal; and a decoding module 804 configured to decode, according to the common decoding capability, a video code stream packet acquired by the video decoding device.

According to the apparatus in the embodiment, a video conference management main device takes a video decoding result between a local video conference terminal and a remote video conference terminal as a common decoding capability, and sends the common decoding capability to a video decoding device, so that the video decoding device processes a video according to the above-mentioned common decoding capability. Therefore, the apparatus in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

In an embodiment, before the step of receiving the common decoding capability sent by the video conference management main device, the above-mentioned second receiving module 802 involves: sending a second registration request to the video conference management main device, the second registration request being used for instructing the video conference management main device to establish a connection with video decoding device.

In an embodiment, before the step of sending the second registration request to the video conference management main device, the above-mentioned second receiving module 802 involves: sending second addressing information to a preset address, the second addressing information being used for instructing the video conference management main device to return second addressing acknowledgement information to the video decoding device; and sending the second registration request to the video conference management main device according to the second addressing acknowledgement information.

In an embodiment, after the step of sending the second registration request to the video conference management main device, the above-mentioned second receiving module 802 involves: sending second keep-alive information to the video conference management main device within a preset period, the second keep-alive information being used for instructing the video conference management main device to return second keep-alive acknowledgement information to the video decoding device.

In an embodiment, the above-mentioned second receiving module 802 receiving the common decoding capability sent by the video conference management main device comprises: sending decoding capability information of the video decoding device to the video conference management main device, the decoding capability information being used for instructing the video conference management main device to send the common decoding capability to the video decoding device.

In an embodiment, the video code stream acquired by the video decoding device comprises at least one of: a local main video code stream packet, a local secondary video code stream packet, a remote main video code stream packet and a remote secondary video code stream packet.

In an embodiment, when the system further comprises at least one video encoding device, the video code stream acquired by the video decoding device is sent by at least one of the following subjects: the video conference management main device and video encoding device.

In an embodiment, when the system further comprises at least one video encoding device, the method further comprises: sending error information to the video conference management main device, so that the video conference management main device sends the error information to the video encoding device to code the error information, the error information being used for indicating that a decoding error occurs in the video decoding device.

The above-mentioned modules may be realized by software or hardware. As for the latter, the modules may be realized in, but not limited to the following manners: the above-mentioned modules are all located in the same processor; or the above-mentioned modules are respectively located in different processors in the form of any combination.

### Embodiment nine

Also provided in the present embodiment is a video processing apparatus. The apparatus is used for realizing the above-mentioned embodiments and preferred embodiments. The description that has been made will not be repeated here. As used below, the term "module" may implement a combination of software and/or hardware that achieves a predetermined function. Although the devices described in the embodiments below are preferably implemented in software, implementation of hardware or a combination of software and hardware is also possible and conceived.

Fig. 21 is a structure diagram of the video processing apparatus in the embodiment of the present application. As shown in fig. 21, the apparatus comprises: a second acquisition module 901 configured to acquire a common decoding capability, the common decoding capability being used for indicating a video decoding result between a local video conference terminal and a remote video conference terminal; and a second sending module 902 configured to send the common decoding capability to the video decoding device, the common decoding capability being used for instructing the video decoding device to decode a video data packet acquired by the video decoding device.

According to the apparatus in the embodiment, a video conference management main device takes a video decoding result between a local video conference terminal and a remote video conference terminal as a common decoding capability, and sends the common decoding capability to a video decoding device, so that the video decoding device processes a video according to the above-mentioned common decoding capability. Therefore, the apparatus in the embodiment can solve the problem in the related art of it being impossible to control user usage costs and research and development costs due to multiple video code streams being processed in a centralized manner during a video conference, and thus, an effect of controlling research and development costs and usage costs of a video conference terminal product during video processing can be achieved.

In an embodiment, before the step of sending the common decoding capability to the video decoding device, the above-mentioned second sending module 902 involves: receiving a second registration request sent by the video decoding device; and in response to second registration request, establishing a connection with video decoding device.

In an embodiment, before the step of receiving the second registration request sent by the video decoding device, the above-mentioned second sending module 902 involves: acquiring second addressing information sent to a preset address by the video decoding device; returning second addressing acknowledgement information to the video decoding device according to the second addressing information; and receiving the second registration request sent by the video decoding device according to the second addressing acknowledgement information.

In an embodiment, after the step of receiving the second registration request sent by the video decoding device, the above-mentioned second sending module 902 involves: receiving second keep-alive information sent by the video decoding device within a preset period; and returning second keep-alive acknowledgement information to the video decoding device according to the second keep-alive information.

In an embodiment, the step of the above-mentioned second sending module 902 sending the common decoding capability to the video decoding device comprises: acquiring decoding capability information of the video decoding device, and sending a common decoding capability to the video decoding device according to the decoding capability information.

In an embodiment, the video code stream packet acquired by the video decoding device comprises at least one of: a local main video code stream packet and a local secondary video code stream packet.

In an embodiment, when the system further comprises at least one video encoding device, the video code stream acquired by the video decoding device is sent by at least one of the following subjects: the video conference management main device and video encoding device.

In an embodiment, when the system further comprises at least one video decoding device, the method further comprises: receiving error information sent by the video decoding device, and sending the error information to the video encoding device to code the error information, the error information being used for indicating that a decoding error occurs in the video decoding device.

The above-mentioned modules may be realized by software or hardware. As for the latter, the modules may be realized in, but not limited to the following manners: the above-mentioned modules are all located in the same processor; or the above-mentioned modules are respectively located in different processors in the form of any combination.

### Embodiment ten

Also provided in the present embodiment of the present application is a storage medium. The storage medium stores a computer program, and the computer program is configured to implement, when being run, the steps in any one of the above method embodiments.

In the embodiment, the above-mentioned storage medium can be configured to store a computer program for implementing the following steps: receiving a common coding capability sent by a video conference management main device, the common coding capability being used for indicating a video coding result between a local video conference terminal and a remote video conference terminal; and coding, according to the common coding capability, a video code stream acquired by the video encoding device.

In the embodiment, the above-mentioned storage medium can include, but not limited to: various media capable of storing a computer program, such as a USB flash disk, a read-only memory (abbreviated as ROM), a random access memory (abbreviated as RAM), a mobile hard disk, a magnetic disk or an optical disk.

### Embodiment eleven

Also provided in the present embodiment of the present application is a storage medium. The storage medium stores a computer program, and the computer program is configured to implement, when being run, the steps in any one of the above method embodiments.

In the embodiment, the above-mentioned storage medium can be configured to store a computer program for implementing the following steps: S1, acquiring a common coding capability, the common coding capability being used for indicating a video coding result between a local video conference terminal and a remote video conference terminal; S2, sending the common coding capability to the video encoding device, so that the video encoding device codes, according to the common coding capability, a video code stream acquired by the video encoding device.

In the embodiment, the above-mentioned storage medium can include, but not limited to: various media capable of storing a computer program, such as a USB flash disk, a read-only memory (abbreviated as ROM), a random access memory (abbreviated as RAM), a mobile hard disk, a magnetic disk or an optical disk.

### Embodiment twelve

Also provided in the present embodiment of the present application is a storage medium. The storage medium stores a computer program, and the computer program is configured to implement, when being run, the steps in any one of the above method embodiments.

In the embodiment, the above-mentioned storage medium can be configured to store a computer program for implementing the following steps: S1, receiving common decoding capability sent by the video conference management main device, the common decoding capability being used for indicating a video decoding result between a local video conference terminal and a remote video conference terminal; S2, decoding, according to the common decoding capability, a video code stream packet acquired by the video decoding device.

In the embodiment, the above-mentioned storage medium can include, but not limited to: various media capable of storing a computer program, such as a USB flash disk, a read-only memory (abbreviated as ROM), a random access memory (abbreviated as RAM), a mobile hard disk, a magnetic disk or an optical disk.

### Embodiment thirteen

Also provided in the present embodiment of the present application is a storage medium. The storage medium stores a computer program, and the computer program is configured to implement, when being run, the steps in any one of the above method embodiments.

In the embodiment, the above-mentioned storage medium can be configured to store a computer program for implementing the following steps: S1, acquiring a common decoding capability, the common decoding capability being used for indicating a video decoding result between a local video conference terminal and a remote video conference terminal; S2, sending the common decoding capability to the video decoding device, so that the video decoding device decodes, according to the common decoding capability, a video code stream packet acquired by the video decoding device.

In the embodiment, the above-mentioned storage medium can include, but not limited to: various media capable of storing a computer program, such as a USB flash disk, a read-only memory (abbreviated as ROM), a random access memory (abbreviated as RAM), a mobile hard disk, a magnetic disk or an optical disk.

### Embodiment fourteen

Also provided in the embodiment of the present application is an electronic apparatus, comprising a memory and a processor. The memory stores a computer program, and the processor is configured to run the computer program to implement the steps in any one of the above method embodiments.

The above-mentioned electronic apparatus can also comprise a transmission device and an input/output device, the transmission device being connected to the above-mentioned processor, and the input/output device being connected to the above-mentioned processor.

In the embodiment, the above-mentioned processor can be configured to implement the following steps by using a computer program: S1, receiving a common coding capability sent by a video conference management main device, the common coding capability being used for indicating a video coding result between a local video conference terminal and a remote video conference terminal; S2, coding, according to the common coding capability, a video code stream acquired by the video encoding device.

In the present embodiment, reference can be made to the described in the above embodiments and optional embodiments, and they will not be repeated herein in the present embodiment.

### Embodiment fifteen

Also provided in the embodiment of the present application is an electronic apparatus, comprising a memory and a processor. The memory stores a computer program, and the processor is configured to run the computer program to implement the steps in any one of the above method embodiments.

The above-mentioned electronic apparatus can also comprise a transmission device and an input/output device, the transmission device being connected to the above-mentioned processor, and the input/output device being connected to the above-mentioned processor.

In the embodiment, the above-mentioned processor can be configured to implement the following steps by using a computer program: S1, acquiring a common coding capability, the common coding capability being used for indicating a video coding result between a local video conference terminal and a remote video conference terminal; S2, sending the common coding capability to the video encoding device, so that the video encoding device codes, according to the common coding capability, a video code stream acquired by the video encoding device.

In the present embodiment, reference can be made to the described in the above embodiments and optional embodiments, and they will not be repeated herein in the present embodiment.

### Embodiment sixteen

Also provided in the embodiment of the present application is an electronic apparatus, comprising a memory and a processor. The memory stores a computer program, and the processor is configured to run the computer program to implement the steps in any one of the above method embodiments.

The above-mentioned electronic apparatus can also comprise a transmission device and an input/output device, the transmission device being connected to the above-mentioned processor, and the input/output device being connected to the above-mentioned processor.

In the embodiment, the above-mentioned processor can be configured to implement the following steps by using a computer program: S1, receiving common decoding capability sent by the video conference management main device, the common decoding capability being used for indicating a video decoding result between a local video conference terminal and a remote video conference terminal; S2, decoding, according to the common decoding capability, a video code stream packet acquired by the video decoding device.

In the present embodiment, reference can be made to the described in the above embodiments and optional embodiments, and they will not be repeated herein in the present embodiment.

### Embodiment seventeen

Also provided in the embodiment of the present application is an electronic apparatus, comprising a memory and a processor. The memory stores a computer program, and the processor is configured to run the computer program to implement the steps in any one of the above method embodiments.

The above-mentioned electronic apparatus can also comprise a transmission device and an input/output device, the transmission device being connected to the above-mentioned processor, and the input/output device being connected to the above-mentioned processor.

In the embodiment, the above-mentioned processor can be configured to implement the following steps by using a computer program: S1, acquiring a common decoding capability, the common decoding capability being used for indicating a video decoding result between a local video conference terminal and a remote video conference terminal; S2, sending the common decoding capability to the video decoding device, so that the video decoding device decodes, according to the common decoding capability, a video code stream packet acquired by the video decoding device.

In the present embodiment, reference can be made to the described in the above embodiments and optional embodiments, and they will not be repeated herein in the present embodiment.

The above-mentioned modules or steps of the present application can be implemented by a universal computing apparatus, and can be centralized on a single computing apparatus or distributed across a network formed by multiple computing apparatuses. The modules or steps may be implemented by program codes executable by the computing apparatus, such that the modules or steps may be stored in a storage apparatus and executed by the computing apparatus, and in some cases, the steps shown or described may be implemented in a sequence different from the sequence described herein, or the steps may be respectively fabricated into individual integrated circuit modules, or multiple modules or steps thereof may be realized as a single integrated circuit module. Thus, the present application is not limited to any specific combination of hardware and software.

## Claims

1. A video processing system, comprising:
a video conference management main device configured to acquire a common coding capability and/or a common decoding capability, wherein the common coding capability is used for indicating a video coding result between a local video conference terminal and a remote video conference terminal, and the common decoding capability is used for indicating a video decoding result between the local video conference terminal and the remote video conference terminal;
at least one video encoding device configured to code, according to the common coding capability sent by the video conference management main device, a video code stream acquired by the at least one video encoding device, wherein the at least one video encoding device is connected to the video conference management main device; and/or
at least one video decoding device, configured to decode, according to the common decoding capability sent by the video conference management main device, a video code stream packet acquired by the at least one video decoding device, wherein the at least one video decoding device is connected to the video conference management main device.

2. The system according to claim 1, wherein when the system comprises the at least one video encoding device, the at least one video encoding device is further configured to: send a first registration request to the video conference management main device, so that the video conference management main device responds to the first registration request and connects to the at least one video encoding device.

3. The system according to claim 2, wherein before the step of sending the first registration request to the video conference management main device, and the at least one video encoding device is further configured to:
send first addressing information to a preset address, so that the video conference management main device returns first addressing acknowledgement information to the at least one video encoding device according to the first addressing information, and
the at least one video encoding device is configured to send the first registration request to the video conference management main device in the way, that it sends the first registration request to the video conference management main device according to the first addressing acknowledgement information.

4. The system according to claim 2, wherein after the step of sending the first registration request to the video conference management main device, the at least one video encoding device is further configured to: send first keep-alive information to the video conference management main device within a preset period, so that the video conference management main device returns first keep-alive acknowledgement information to the at least one video encoding device according to the first keep-alive information.

5. The system according to any one of claims 1 to 4, wherein when the system comprises the at least one video encoding device, the video conference management main device is further configured to: acquire coding capability information of the at least one video encoding device, and send the common coding capability to the at least one video encoding device according to the coding capability information.

6. The system according to any one of claims 1 to 4, wherein when the system comprises the at least one video encoding device, the video code stream comprises at least one of: a local main video code stream and a local secondary video code stream.

7. The system according to any one of claims 1 to 4, wherein when the system comprises the at least one video encoding device and the at least one video decoding device, the at least one video encoding device is further configured to: receive error information sent by the video conference management main device, and code the error information according to the common coding capability, wherein the error information is used for indicating that a decoding error occurs in the video decoding device.

8. The system according to claim 1, wherein when the system comprises the at least one video decoding device, the at least one video decoding device is further configured to: send a second registration request to the video conference management main device, so that the video conference management main device responds to the second registration request and connects to the at least one video decoding device.

9. The system according to claim 8, wherein before the step of sending a second registration request to the video conference management main device, the at least one video decoding device is further configured to:
send second addressing information to a preset address, so that the video conference management main device returns second addressing acknowledgement information to the at least one video decoding device according to the second addressing information, and
the at least one video decoding device is configured to send the second registration request to the video conference management main device in the way, that it sends the second registration request to the video conference management main device according to the second addressing acknowledgement information.

10. The system according to claim 8, wherein after the step of sending the second registration request to the video conference management main device, the at least one video decoding device is further configured to: send second keep-alive information to the video conference management main device within a preset period, so that the video conference management main device returns second keep-alive acknowledgement information to the at least one video decoding device according to the second keep-alive information.

11. The system according to any one of claims 1 and 8 to 10, wherein when the system comprises the at least one video decoding device, the video conference management main device is further configured to: acquire decoding capability information of the at least one video decoding device, and send the common decoding capability to the at least one video decoding device according to the decoding capability information.

12. The system according to any one of claims 1 and 8 to 10, wherein when the system comprises the at least one video decoding device, the video code stream packet comprises at least one of: a local main video code stream packet, a local secondary video code stream packet, a remote main video code stream packet and a remote secondary video code stream packet.

13. The system according to any one of claims 1 and 8 to 10, wherein when the system comprises the at least one video encoding device and the at least one video decoding device, the at least one video decoding device is further configured to: send error information to the video conference management main device when a decoding error occurs in the at least one video decoding device, so that the video conference management main device sends the error information to the at least one video encoding device for coding.

14. A video processing method applied to the video processing system according to any one of claims 1 to 13, when the system comprises the at least one video encoding device, the method comprising:
receiving a common coding capability sent by a video conference management main device, wherein the common coding capability is used for indicating a video coding result between a local video conference terminal and a remote video conference terminal; and coding, according to the common coding capability, a video code stream acquired by the at least one video encoding device.

15. The method according to claim 14, wherein before the step of receiving the common coding capability sent by the video conference management main device, the method further comprises: sending a first registration request to the video conference management main device, wherein the first registration request is used for instructing the video conference management main device to establish a connection with the at least one video encoding device.

16. The method according to claim 15, wherein before the step of sending the first registration request to the video conference management main device, the method further comprises:
sending first addressing information to a preset address, wherein the first addressing information is used for instructing the video conference management main device to return first addressing acknowledgement information to the at least one video encoding device; and
wherein the step of sending the first registration request to the video conference management main device comprises sending the first registration request to the video conference management main devicevideo conference management main device according to the first addressing acknowledgement information.

17. The method according to claim 15, wherein after the step of sending the first registration request to the video conference management main device, the method further comprises: sending first keep-alive information to the video conference management main device within a preset period, wherein the first keep-alive information is used for instructing the video conference management main device to return first keep-alive acknowledgement information to the at least one video encoding device.

18. The method according to any one of claims 14 to 17, wherein before the step of receiving the common coding capability sent by the video conference management main device, the method further comprises: sending coding capability information of the at least one video encoding device to the video conference management main device, wherein the coding capability information is used for instructing the video conference management main device to send the common coding capability to the at least one video encoding device.

19. The method according to any one of claims 14 to 17, wherein the video code stream acquired by the at least one video encoding device comprises at least one of: a local main video code stream and a local secondary video code stream.

20. The method according to any one of claims 14 to 17, wherein when the system further comprises the at least one video decoding device, the method further comprises:
receiving error information sent by the video conference management main device and coding the error information, wherein the error information is sent to the video conference management main device by the at least one video decoding device, and
the error information is used for indicating that a decoding error occurs in the at least one video decoding device.

21. A video processing method applied to the video processing system according to any one of claims 1 to 13, when the system comprises the at least one video encoding device, the method comprising:
acquiring a common coding capability, wherein the common coding capability is used for indicating a video coding result between a local video conference terminal and a remote video conference terminal; and
sending the common coding capability to the at least one video encoding device, so that the at least one video encoding device codes, according to the common coding capability, a video code stream acquired by the at least one video encoding device.

22. The method according to claim 21, wherein before the step of sending the common coding capability to the at least one video encoding device, the method further comprises:
receiving a first registration request sent by the at least one video encoding device; and
responding to the first registration request, and establishing a connection with the at least one video encoding device.

23. The method according to claim 22, wherein before the step of receiving the first registration request sent by the at least one video encoding device, the method further comprises:
acquiring first addressing information sent to a preset address by the at least one video encoding device;
returning first addressing acknowledgement information to the at least one video encoding device according to the first addressing information; and
wherein the step of receiving the first registration request sent by the at least one video encoding device comprises: receiving the first registration request sent by the at least one video encoding device according to the first addressing acknowledgement information.

24. The method according to claim 22, wherein after the step of receiving the first registration request sent by the at least one video encoding device, the method further comprises:
receiving first keep-alive information sent by the at least one video encoding device within a preset period; and
returning first keep-alive acknowledgement information to the at least one video encoding device according to the first keep-alive information.

25. The method according to any one of claims 21 to 24, wherein the step of sending the common coding capability to the at least one video encoding device comprises: acquiring coding capability information of the at least one video encoding device, and sending the common coding capability to the at least one video encoding device according to the coding capability information.

26. The method according to any one of claims 21 to 24, wherein the video code stream acquired by the at least one video encoding device comprises at least one of: a local main video code stream and a local secondary video code stream.

27. The method according to any one of claims 21 to 24, wherein when the system further comprises the at least one video decoding device, the method further comprises: receiving error information sent by the at least one video decoding device, and sending the error information to the at least one video encoding device for coding, wherein the error information is used for indicating that a decoding error occurs in the video decoding device.

28. A video processing method applied to the video processing system according to any one of claims 1 to 13, when the system comprises the at least one video decoding device, the method comprising:
receiving a common decoding capability sent by the video conference management main device, wherein the common decoding capability is used for indicating a video decoding result between the local video conference terminal and the remote video conference terminal; and
decoding, according to the common decoding capability, a video code stream packet acquired by the at least one video decoding device.

29. The method according to claim 28, wherein before the step of receiving the common decoding capability sent by the video conference management main device, the method further comprises: sending a second registration request to the video conference management main device, wherein the second registration request is used for instructing the video conference management main device to establish a connection with the at least one video decoding device.

30. The method according to claim 29, wherein before the step of sending the second registration request to the video conference management main device, the method further comprises:
sending second addressing information to a preset address, wherein the first addressing information is used for instructing the video conference management main device to return first addressing acknowledgement information to the at least one video decoding device; and
wherein the step of sending the second registration request to the video conference management main device comprises sending the second registration request to the video conference management main device according to the second addressing acknowledgement information.

31. The method according to claim 29, wherein after the step of sending the second registration request to the video conference management main device, the method further comprises: sending second keep-alive information to the video conference management main device within a preset period, wherein the second keep-alive information is used for instructing the video conference management main device to return second keep-alive acknowledgement information to the at least one video decoding device.

32. The method according to any one of claims 28 to 31, wherein before the step of receiving the common decoding capability sent by the video conference management main device, the method further comprises: sending decoding capability information of the at least one video decoding device to the video conference management main device, wherein the decoding capability information is used for instructing the video conference management main device to send the common decoding capability to the at least one video decoding device.

33. The method according to any one of claims 28 to 31, wherein the video code stream acquired by the at least one video decoding device comprises at least one of: a local main video code stream packet, a local secondary video code stream packet, a remote main video code stream packet and a remote secondary video code stream packet.

34. The method according to any one of claims 28 to 31, wherein when the system further comprises the at least one video encoding device, the video code stream acquired by the at least one video decoding device is sent by at least one of the following subjects: the video conference management main device and the at least one video encoding device.

35. The method according to any one of claims 28 to 31, wherein when the system further comprises the at least one video encoding device, the method further comprises: sending error information to the video conference management main device, so that the video conference management main device sends the error information to the at least one video encoding device for coding, wherein the error information is used for indicating that a decoding error occurs in the at least one video decoding device.

36. A video processing method applied to the video processing system according to any one of claims 1 to 13, when the system comprises the at least one video decoding device, the method comprising:
acquiring a common decoding capability, wherein the common decoding capability is used for indicating a video decoding result between a local video conference terminal and a remote video conference terminal; and
sending the common decoding capability to the at least one video decoding device, so that the at least one video decoding device decodes, according to the common decoding capability, a video code stream packet acquired by the at least one video decoding device.

37. The method according to claim 36, wherein before the step of sending the common decoding capability to the at least one video decoding device, the method further comprises:
receiving a second registration request sent by the at least one video decoding device; and
responding to the second registration request, and establishing a connection with the at least one video decoding device.

38. The method according to claim 37, wherein before the step of receiving the second registration request sent by the at least one video decoding device, the method further comprises:
acquiring second addressing information sent to a preset address by the at least one video decoding device;
returning second addressing acknowledgement information to the at least one video decoding device according to the second addressing information; and
wherein the step of receiving the second registration request sent by the at least one video decoding device comprises receiving the second registration request sent by the at least one video decoding device according to the second addressing acknowledgement information.

39. The method according to claim 37, wherein after the step of receiving the second registration request sent by the at least one video decoding device, the method further comprises:
receiving second keep-alive information sent by the at least one video decoding device within a preset period; and
returning second keep-alive acknowledgement information to the at least one video decoding device according to the second keep-alive information.

40. The method according to any one of claims 36 to 39, wherein the step of sending the common decoding capability to the at least one video decoding device comprises: acquiring decoding capability information of the at least one video decoding device, and sending the common decoding capability to the at least one video decoding device according to the decoding capability information.

41. The method according to any one of claims 36 to 39, wherein the video code stream packet acquired by the at least one video decoding device comprises at least one of: a local main video code stream packet and a local secondary video code stream packet.

42. The method according to any one of claims 36 to 39, wherein when the system further comprises the at least one video encoding device, the video code stream acquired by the at least one video decoding device is sent by at least one of the following subjects: the video conference management main device and the at least one video encoding device.

43. The method according to any one of claims 36 to 39, wherein when the system further comprises the at least one video coding device, the method further comprises: receiving error information sent by the at least one video decoding device, and sending the error information to the at least one video encoding device for coding, wherein the error information is used for indicating that a decoding error occurs in the at least one video decoding device.

44. A video processing apparatus applied to the video processing system according to any one of claims 1 to 13, when the system comprises the at least one video encoding device, the apparatus comprising:
a receiving module configured to receive a common coding capability sent by a video conference management main device, wherein the common coding capability is used for indicating a video coding result between a local video conference terminal and a remote video conference terminal; and
a coding module configured to code, according to the common coding capability, a video code stream acquired by the at least one video encoding device.

45. A video processing apparatus applied to the video processing system according to any one of claims 1 to 13, when the system comprises the at least one video encoding device, the apparatus comprising:
an acquisition module configured to acquire a common coding capability, wherein the common coding capability is used for indicating a video coding result between a local video conference terminal and a remote video conference terminal; and
a sending module configured to send the common coding capability to the at least one video encoding device, wherein the common coding capability is used for instructing the at least one video encoding device to code video data acquired by the at least one video encoding device.

46. A video processing apparatus applied to the video processing system according to any one of claims 1 to 13, when the system comprises the at least one video decoding device, the apparatus comprising:
a receiving module configured to receive a common decoding capability sent by a video conference management main device, wherein the common decoding capability is used for indicating a video decoding result between a local video conference terminal and a remote video conference terminal; and
a decoding module configured to decode, according to the common decoding capability, a video code stream packet acquired by the at least one video decoding device.

47. A video processing apparatus of the video processing system according to any one of claims 1 to 13, applied to the video processing system according to any one of claims 1 to 13, when the system comprises the at least one video decoding device, the apparatus comprising:
an acquisition module configured to acquire a common decoding capability, wherein the common decoding capability is used for indicating a video decoding result between a local video conference terminal and a remote video conference terminal; and
a sending module configured to send the common decoding capability to the at least one video decoding device, so that the at least one video decoding device decodes, according to the common decoding capability, a video data packet acquired by the at least one video decoding device.

48. A storage medium, storing a computer program, wherein the computer program is configured to implement, when being run, the video processing method according to any one of claims 14 to 20, claims 21 to 27, claims 28 to 35 and claims 36 to 43.

49. An electronic apparatus, comprising a memory and a processor, wherein the memory stores a computer program, and the processor is configured to run the computer program to implement the video processing method according to any one of claims 14 to 20, claims 21 to 27, claims 28 to 35 and claims 36 to 43.
